# EUROPÄISCHE PATENTSCHRIFT

(11) **EP 2 649 357 B1**
(45) Veröffentlichungstag und Bekanntmachung des Hinweises auf die Patenterteilung: **10.12.2014**
(21) Anmeldenummer: 11764783.4
(22) Anmeldetag: 07.10.2011
(51) Int. Cl.: F16L 25/01, F16L 53/00, H05B 3/58, F01N 3/20, H01R 13/00

(54) **Verwendung einer beheizbaren Fluidleitung**
Use of a heatable fluid line
Utilisation d'une conduite de fluide chauffable

(30) Priorität: 08.12.2010 DE 102010053737
(43) Veröffentlichungstag der Anmeldung: 16.10.2013
(60) Teilanmeldung: 14183493.7
(73) Patentinhaber: Voss Automotive GmbH, 51688 Wipperfürth (DE)
(72) Erfinder: SCHWARZKOPF, Otfried, 51515 Kürten (DE); HEIENBROK, Mark, 51766 Engelskirchen (DE); ISENBURG, Marco, 40885 Ratingen (DE); JESCHONNEK, Markus, 51688 Wipperfürth (DE); SCHÖNEBERG, Christoph, 51688 Wipperfürth (DE); BERG, Manfred, 51688 Wipperfürth (DE); BRANDT, Josef, 51688 Wipperfürth (DE); ETSCHEID, Tobias, 51789 Lindlar (DE); PLUM, Horst, 51427 Bergisch Gladbach (DE)
(74) Vertreter: Patentanwälte Dr. Solf & Zapf
(86) Internationale Anmeldenummer: PCT/EP2011/067568
(87) Internationale Veröffentlichungsnummer: WO 2012/076217

(56) Entgegenhaltungen:
- EP-A1- 1 793 152
- WO-A1-2006/024715
- WO-A1-2008/131993
- WO-A1-2011/085154
- DE-A1- 10 060 316
- DE-A1-102005 048 943
- DE-A1-102008 025 299
- DE-U1-202005 004 602
- DE-U1-202009 003 807
- DE-U1-202009 012 230

## Beschreibung

Die vorliegende Erfindung betrifft die Verwendung einer beheizbaren Fluidleitung, umfassend mindestens eine Rohrleitung und mindestens einen sich über mindestens einen Teilbereich der Rohrleitungslänge erstreckenden elektrischen Heizleiter.

Unter Konfektionieren bzw. Konfektion der Leitung wird dabei die Endstufe der Herstellung einer einbaufertigen Fluidleitung verstanden, nach der die Leitung - z. B. nach Kundenvorgabe - als mit Verbinderteilen, wie Fluidkkupplungsteilen und/oder Leitungsverbindern, ausgerüstetes Bauteil lieferbar und industriell, vorzugsweise in der Kraftfahrzeugtechnik, einsetzbar ist.

Beheizbare Fluidleitungen sind in unterschiedlichen Formen bekannt und kommen beispielsweise in Fluidverteilungssystemen von Kraftfahrzeugen zur Anwendung. Bei dem Fluid kann es sich z. B. um Wasser für eine Scheibenwaschanlage oder um eine wässrige Harnstofflösung handeln, wie sie zur Reduzierung von Stickoxiden in Abgas-SCR-Katalysatoren (SCR = Selective Catalytic Reduction = selektive katalytische Reduktion) verwendet wird. Bei niedrigen Umgebungstemperaturen kann die Flüssigkeit einfrieren. Deshalb werden Fluid führende Elemente, wie Pumpen oder Schläuche, beheizt, um das Einfrieren zu verhindern oder um ein bereits eingefrorenes Fluid wieder aufzutauen. Dazu werden innerhalb des Fluidsystems beheizbare Komponenten über Fluidleitungen verbunden, wobei auch diese elektrisch beheizt sein können.

In den genannten Systemen werden dabei an die beheizbaren Fluidleitungen hohe, sich aus den Beanspruchungsbedingungen ergebende Anforderungen gestellt. Diese Anforderungen betreffen insbesondere das mögliche Auftreten hoher Temperaturen, die an bestimmten Stellen des Systems bzw. der Leitungen z. B. im Bereich von 140 °C bis 180 °C, kurzzeitig sogar im Bereich bis zu 200 ° C, liegen können, des Weiteren das Auftreten hoher absoluter Drücke, die standardmäßig im Bereich von 5 bar bis 10 bar, teilweise auch im Bereich bis zu 15 bar, liegen, das Auftreten von Druckpulsationen, die kompensiert werden müssen, sowie auch das Auftreten von Volumenänderungen, die beispielsweise mit dem Gefrieren bei Frost und dem Wiederauftauen des Fluids verbunden sind. Hier spricht man im Hinblick auf die Beanspruchungsgröße von einer sogenannten Eisdruckfestigkeit der Leitung.

Bei den beheizbaren Fluidleitungen lassen sich hinsichtlich der Bindung des Heizleiters an die Rohrleitung als grundsätzliche Ausführungsarten eine adaptive, entweder außen- oder innenliegende, und eine integrierte Bindung unterscheiden.

Eine adaptive Verbindung, bei der der Heizleiter außen auf der Rohrleitung liegt, ist in der EP 1 985 908 A1 beschrieben. Dieses Dokument bezieht sich auf einen Leitungsverbinder für Medienleitungen, der einerseits ein Verbinderstück umfasst, das mindestens einen Anschlussabschnitt zur Anschlussverbindung mit einer Fluidleitung der eingangs genannten Art oder mit einem Aggregat aufweist, und der andererseits einen an den Anschlussabschnitt angrenzenden Übergangsabschnitt mit einem Strömungskanal aufweist. Im Bereich des Übergangsabschnittes sind elektrische Heizmittel in einer den Strömungskanal zumindest teilweise umschließenden Anordnung vorgesehen. Bei der Verwendung einer Rohrleitung aus einem der üblicherweise eingesetzten Kunststoffe bestehen dabei Probleme hinsichtlich der Gefrierfestigkeit der Fluidleitung sowie einer beschränkten Hochtemperatureignung bzw. thermischen Belastbarkeit. Des Weiteren hängt die Befestigbarkeit des üblicherweise als Litze ausgebildeten Heizleiters von der Geometrie der Rohrleitung ab; es besteht ein erhöhter Konnektierungsaufwand, und Pulsationen können nicht ausreichend kompensiert werden.

Eine weitere bekannte adaptive Verbindung, bei der der Heizleiter jedoch innen in der Rohrleitung liegt, ist in der EP 2 040 510 A1 beschrieben. Auch hier bestehen bei Verwendung eines üblichen Kunststoffs als Material einer Rohrleitung der eingangs genannten Art Probleme hinsichtlich einer beschränkten Gefrierfestigkeit und Hochtemperatureinsatzfähigkeit bzw. einer thermischen Dauerbelastbarkeit sowie hinsichtlich eines ungenügenden Pulsationsausgleichs. Hinzu kommt nachteiligerweise eine fehlende Rohrisolation, wodurch die Fluidleitung für niedrige Temperaturen im Bereich von weniger als - 15 °C ungeeignet ist.

Bekannte beheizbare Fluidleitungen der eingangs genannten Art mit Vollintegration von Heizleiter und Rohrleitung sind in der DE 10 2006 051 413 A1 und der DE 102 01 920 A1 beschrieben.

Das erste Dokument DE 10 2006 051 413 A1 bezieht sich dabei auf eine elektrisch beheizbare Fluidleitung mit einem inneren Querschnittsbereich, der einen mediumführenden Kanal umgibt, einer Heizleiteranordnung, die in wärmeleitender Verbindung mit dem inneren Querschnittsbereich angeordnet ist, und einem äußeren Querschnittsbereich, der die Heizleiteranordnung umgibt. Zwischen dem inneren Querschnittsbereich und dem äußeren Querschnittsbereich ist dabei eine Zwischenschicht angeordnet, die die Heizleiteranordnung vom äußeren Querschnittsbereich trennt und die mechanisch eine geringere Stabilität als der innere Querschnittsbereich und der äußere Querschnittsbereich aufweist. Dadurch ist es möglich, den äußeren Querschnittsbereich zu durchtrennen und vom Ende der Fluidleitung abzuziehen, ohne dass der Heizleiter beschädigt wird.

Weil die Zwischenschicht vergleichsweise mechanisch weniger stabil ist, kann auch sie ohne Weiteres, und zwar insbesondere manuell, entfernt werden. Auch diese bekannte Fluidleitung weist bei Verwendung einer Rohrleitung, bei der jeweils der innere und/ oder der äußere Querschnittsbereich der Rohrleitung aus einem technischen Kunststoff besteht, eine beschränkte Gefrierfestigkeit sowie eine beschränkte Hochtemperatureignung bzw. thermische Belastbarkeit auf. Außerdem ist aufgrund des mehrschichtigen Wandaufbaus ein hoher Materialeinsatz erforderlich. Bei der Montage besteht ein im Vergleich mit adaptiven Verbindungen von Heizleiter und Rohrleitung hoher Freilegungsaufwand für den Heizleiter und damit auch ein hoher Konnektierungsaufwand. Hinzu kommen nachteiligerweise auch hier eine ungenügende Rohrisolation und eine mangelhafte Pulsationskompensation sowie auch die Schwierigkeit, unterschiedliche Schaltungsvarianten der Fluidleitung zu realisieren.

Das zweite Dokument DE 102 01 920 A1 bezieht sich auf einen flexiblen mehrschichtigen beheizbaren Schlauch mit wenigstens einer Verstärkungsschicht und einer elastomeren Außenschicht sowie mit einem zur Erwärmung eines im Schlauch fließenden Mediums dienenden elektrischen Heizleiter. Dieser Schlauch ist ebenfalls als - flexible - Rohrleitung der eingangs genannten Art anzusehen. Der Heizleiter erstreckt sich über zumindest einen Teilbereich der Schlauchlänge und besteht aus einer metallischen Seele und einer Ummantelung. Der Heizleiter ist außerhalb der äußeren Lage der Verstärkungsschicht, aber unter oder innerhalb der elastomeren Außenschicht eingebettet und ist durch eine radial nach außen einwirkende Kraft unter Durchtrennen der ursprünglichen oder geschwächten elastomeren Außenschicht, aber ohne Schädigung seiner metallischen Seele und seiner Ummantelung freilegbar und unmittelbar mit einer elektrischen Anschlussvorrichtung elektrisch verbindbar. Bei diesem bekannten Schlauch bestehen hinsichtlich des wegen der Gewährleistung einer ausreichenden Wandstärke hohen erforderlichen Materialeinsatzes, einer eingeschränkten Möglichkeit der Bildung von Varianten, mangelnder Rohrisolation und vergleichsweise hohem Konnektierungsaufwand Probleme

Das Dokument EP 1 793 152 A1 offenbart die Verwendung einer beheizbaren Fluidleitung für ein SCR-Katalysatorsystem eines Verbrennungsmotors nach dem Oberbegriff von Anspruch 1.

Der vorliegenden Erfindung liegt die Aufgabe zugrunde, eine Verwendung einer beheizbaren Fluidleitung der eingangs genannten Art zu schaffen, die bei wenig aufwändiger Herstellungsweise und Montage- bzw. Konnektierungsfähigkeit der Fluidleitung - verglichen mit den bekannten Leitungen - erhöhte Anforderungen hinsichtlich der Beständigkeit gegenüber hohen Temperaturen, der Kompensation von Druckpulsationen und/oder der Eisdruckfestigkeit erfüllt. Die dargestellten Nachteile der aus dem Stand der Technik bekannten beheizbaren Fluidleitungen sollen dabei überwunden werden.

Erfindungsgemäß wird dies durch die Merkmale von Anspruch 1 erreicht. Insbesondere weist die Rohrleitung mindestens zwei Längenabschnitte auf, die hinsichtlich ihrer Materialeigenschaften und/oder ihrer konstruktiven Gestalt unterschiedlich ausgebildet sind, und zwar mindestens einerseits einen ersten Längenabschnitt, der aus einem ersten Material besteht, welches ein erstes Polymer enthält, und andererseits einen zweiten Längenabschnitt, der aus einem zweiten Material besteht, welches ein zweites Polymer enthält, wobei das Material des zweiten Längenabschnitts flexibler ist und/oder eine höhere Beanspruchbarkeit aufweist als das Material des ersten Längenabschnitts. Hierbei ist der Fall eingeschlossen, dass die Längenabschnitte jeweils vollständig aus den genannten Polymeren bestehen.

Der Erfindung liegt die Erkenntnis zugrunde, dass durch eine erfindungsgemäß - wie vorstehend beschrieben - in Hybridbauweise ausgeführte beheizbare Leitung die Problematik der konträren, an die Fluidleitung gestellten Anforderungen einer überraschend einfachen technischen Lösung zugeführt werden kann. Dabei erfolgt eine differenzierte Strukturierung der Leitung, d. h. die verschiedenen Längenabschnitte der Leitung werden entsprechend den lokal unterschiedlich vorliegenden Anforderungen gestaltet, wobei der zweite Längenabschnitt oder mehrere aus dem zweiten polymerhaltigen Material gebildete Längenabschnitte die erforderliche Hochtemperaturfestigkeit und/oder Kompensation von Druckpulsationen sowie von Volumenänderungen durch die Einwirkung von Eisdruck für die gesamte Leitung gewährleisten. Auch kann in den verschiedenen Längenabständen die chemische Beständigkeit, insbesondere die hydrolytische Beständigkeit der erfindungsgemäßen Fluidleitung unter Temperatureinfluss, in besonderer Weise Berücksichtigung finden, indem sie lokal unterschiedlich ausgebildet wird. Das Material des zweiten Längenabschnitts kann also eine im Hinblick auf Temperatur, chemische Beständigkeit und/oder Druck höhere Beanspruchbarkeit aufweisen als das Material des ersten Längenabschnitts.

Es sei in diesem Zusammenhang bemerkt, dass die Rohrleitung mit Vorteil auch jeweils zwei oder mehr Längenabschnitte umfassen kann, die aus dem ersten polymerhaltigen Material bestehen, und/oder Längenabschnitte, die aus dem zweiten, z. B. gummielastischen und damit dehnfähigen, polymerhaltigen Material bestehen.

Der zweite Längenabschnitt bzw. mehrere Abschnitte dieser Art kann bzw. können für besondere Beanspruchungen, wie höhere Temperaturen, wie sie vor allem in der Nähe einer Einspritzeinrichtung eines SCR-Katalysatorsystems eines Fahrzeug-Verbrennungsmotors und des Abgasstrangs des Motors auftreten, sowie auch zur Anpassung an eine Fluid-Volumenausdehnung beim Gefrieren und an den daraus resultierenden Gefrierdruck ausgelegt sein. Diese Tieftemperaturbeanspruchung tritt in einem SCR-Katalysatorsystem am Ausgang aus einem Fluid-Tank auf, der bei der genannten Anwendung als Vorratsbehälter für das katalytisch wirkende Fluid dient und insbesondere eine wässrige Harnstofflösung enthält.

Das Material des ersten Längenabschnitts kann insbesondere ein Polymer enthalten, das ein technischer Kunststoff ist, während das Material des zweiten Längenabschnitts insbesondere ein Polymer enthalten kann, das ein Hochleistungskunststoff ist.

Wenn dabei vorstehend und im Weiteren die Ausdrücke "technischer Kunststoff" und "Hochleistungskunststoff" verwendet werden, so beziehen sich diese Ausdrücke auf eine in der Fachwelt übliche Einteilung der Kunststoffe hinsichtlich ihrer Dauergebrauchstemperatur. Danach wird zwischen Massen- oder Standardkunststoffen mit einer Dauergebrauchstemperatur bis zu 90 °C, technischen Kunststoffen mit einer Dauergebrauchstemperatur bis zu 140 °C und Hochleistungskunststoffen mit einer Dauergebrauchstemperatur über 140 °C unterschieden.

Die Dauergebrauchstemperatur kann auf verschiedene Weise ermittelt werden. In der Methode nach UL 746 B wird ein sogenannter Temperatur-Index angeführt, d. h., es wird diejenige Temperatur bestimmt, bei der der Polymerwerkstoff nach 60 000 bzw. 100 000 Stunden noch die Hälfte seiner Zugfestigkeit, seiner Schlagzugfestigkeit oder seiner elektrischen Durchschlagfestigkeit aufweist. Eine analoge Methode ist die IEC 216 (International Electrical Committee), die der DIN VDE 0304 entspricht. Nach dieser Methode wird diejenige Temperatur bestimmt, bei der nach 20 000 Stunden die Werte der mechanischen und elektrischen Eigenschaften nur noch die Hälfte betragen.

Als Massenkunststoffe werden aufgrund dieser Kriterien insbesondere Polyethylen (PE), Polypropylen (PP), Polyvinylchlorid (PVC) und Polystyrol (PS) klassifiziert. Zu den technischen Kunststoffen zählen Polymethacrylsäuremethylester (PMMA), Polyamid (PA), Polyethylenterephtalat (PET), Polycarbonat (PC), Acrylnitril-Butadien-Styrol (ABS) und Polyoxymethylen (POM). Zu den Hochleistungskunststoffen zählen Polytetrafluorethylen (PTFE), Polyvinylidenfluorid (PVDF), Polybutylenterephtalat (PBT), Polysulfone (PSU), Polyaryletherketone (PAEK), Polyphenylensulfide (PPS) und Polyimide (PI) sowie verschiedene Copolymere, die die kleinsten repetierenden Ketten-Struktureinheiten der vorgenannten Verbindungen gemeinsam enthalten. Da diese hochwertigen Polymere sehr aufwändig herzustellen und folglich teuer sind, beschränkt sich ihr Einsatz auf bestimmte Spezialfälle. Aus diesem Grund werden diese Werkstoffe trotz ihres exzellenten Eigenschaftsbildes auch nicht zur Herstellung von bekannten Fluidleitungen eingesetzt.

Ein erster, einen technischen Kunststoff enthaltender, insbesondere vollständig aus diesem Kunststoff bestehender, Längenabschnitt der Rohrleitung ist sehr kostengünstig herstellbar und kann deshalb insbesondere in größerer Länge - bzw. in im Vergleich mit dem zweiten Längenabschnitt größerer Länge - innerhalb eines Kraftfahrzeugs eingesetzt werden.

Als polymerer Werkstoff des ersten Längenabschnitts kann dabei mit Vorteil ein Polyamid (PA), insbesondere PA 6, PA 66, PA 11 oder PA 12, gewählt werden, wodurch eine im Hinblick auf den Gesamt-Werkstoffeinsatz aufwandsarme Fertigung der erfindungsgemäßen Fluidleitung gewährleistet werden kann. Der erste Längenabschnitt kann dabei beispielsweise als Kunststoff-Formrohr ausgebildet sein, wobei im Sinne einer erhöhten Stabilität auch gefüllte technische Kunststoffe, z. B. faserverstärkte Kunststoffe, zum Einsatz kommen können.

Polyamide sind eine überaus große Polymerklasse, deren einzelne Vertreter auf unterschiedliche Weise hergestellt werden. Charakteristisch ist dabei das Vorhandensein von funktionellen Amidgruppen -CO-NH- oder auch -CO-NR- im Makromolekül, wobei R einen organischen Rest beschreibt. Zur Bezeichnung der Polyamide mit Kurzzeichen, die aus den Buchstaben "PA" sowie darauf folgenden Zahlen und Buchstaben bestehen, wird auf die Norm DIN EN ISO 1043-1 verwiesen. Hiernach werden Polyamide, die sich von einer Aminocarbonsäure des Typs H₂N-(CH₂)ₓ-COOH oder den entsprechenden Lactamen ableiten lassen, mit PA Z gekennzeichnet, wobei Z die Anzahl der Kohlenstoffatome im Monomer bezeichnet (Z = x + 1). So steht z. B. PA 6 für ein Polymer, das aus ε-Caprolactam bzw. ω-Aminocapronsäure [NH-(CH₂)₅-CO]ₙ. hergestellt wird. PA 11 wird aus 11-Aminoundecansäure und PA 12 aus Laurinlactam oder ω-Aminodecansäure hergestellt.

PA 11 und PA 12 sind kältebeständig bis mindestens -50 °C und dauerwärmebeständig bis höchstens +80 °C. Durch Zusatz von Stabilisatoren sowie Weichmachern kann jedoch die Kälte- bzw. Wärmebeständigkeit auf Werte von -60 °C bzw. +110 °C, kurzzeitig bis 160 °C erhöht werden. PA 12 ist beispielsweise unter dem Namen VESTAMID^{®} L im Handel. Dieser Werkstoff weist nur eine sehr geringe Wasseraufnahme auf, wobei aus ihm hergestellte Formteile bei wechselnder Umgebungsfeuchte nur geringste Dimensionsänderungen zeigen. Selbst weit unter dem Gefrierpunkt hat PA12 eine außerordentlich hohe Schlagzähigkeit und Kerbschlagzähigkeit. Des Weiteren weist es eine gute bis sehr gute chemische Beständigkeit gegen Fette, Öle, Kraftstoffe, Hydraulikflüssigkeiten, viele Lösemittel sowie Salzlösungen und andere Chemikalien auf.

Polyamide, die sich von Diaminen und Dicarbonsäuren der Typen H₂N-(CH₂)ₓ-NH₂ und HOOC-(CH₂)_{y}-COOH ableiten lassen, werden mit PA Z1Z2 gekennzeichnet, wobei Z1 die Anzahl der Kohlenstoffatome im Diamin und Z2 die Anzahl der Kohlenstoffatome in der Dicarbonsäure bezeichnet (Z1 = x, Z2 = *y* + 2). So steht z. B. PA 66 für das Polymer aus Hexamethylendiamin und Adipinsäure, [NH-(CH₂)₆-NH-CO-(CH₂)₄-CO]ₙ.

Obwohl der Herstellungsprozess der beiden technisch am häufigsten verwendeten Polyamide PA 6 und PA 66 grundlegend verschieden ist, sind PA 6 und PA 66 chemisch und physikalisch sehr ähnlich und unterscheiden sich lediglich durch eine gespiegelte Anordnung einer -CH₂-NH-CO-Gruppe. PA 6 und PA 66 sind kältebeständig bis mindestens -30 °C und dauerwärmebeständig bis höchstens 105 °C, bzw. PA 66 bis maximal 120 °C.

Das Polymer des zweiten Längenabschnitts kann mit Vorteil ein Elastomer, beispielsweise hydrierter Acrylnitrilbutadien-Kautschuk (HNBR), Ethylen-Propylen-Dien-Kautschuk (EPDM) für eine Temperaturbeanspruchung bis zu 170 °C. ein Ethylen-Propylen-Kautschuk (EPM) für eine Temperaturbeanspruchung über 200 °C oder auch ein thermoplastisches Elastomer (TPE) sein.

Aus dieser Werkstoffklasse erscheinen besonders PA 12-Elastomere geeignet. Diese sind Blockcopolymere aus PA 12- und aus Polyether-Segmenten (Polyetherblockamide PEBA). Sie zeigen die wesentlichen Eigenschaften von PA12, wobei sich mit zunehmendem Polyether-Gehalt der Elastomercharakter immer mehr ausprägt. Die Polymere werden elastisch biegsamer und kälteschlagzäher.

Dabei kann der zweite Längenabschnitt als - im Vergleich mit dem ersten Längenabschnitt - flexiblerer, für höhere Beanspruchungen, insbesondere höhere Temperaturen und/oder höheren Innendruck, ausgelegter Schlauch ausgeführt werden, der aus einem gummielastischen, insbesondere mehrschichtigen, z. B. gewebeverstärkten Material besteht. Als Druckträgergewebe für eine solche Verstärkung können bei Temperaturen, die im Bereich von etwa 150 °C bis 180 °C liegen, mit Vorteil Gewebe aus aromatischen Polyamidfasern (Aramid), beispielsweise bekannt unter dem Markennamen Kevlar®, und für noch höhere Temperaturbereiche Gewebe aus Kohlenstofffasern eingesetzt werden.

Als Hochleistungskunststoffe können vor allem Fluorpolymere, wie Polytetrafluorethylen (PTFE), Ethylen-Tetrafluorethylen (ETFE), Perfluorethylenpropylen (FEP), Polyarylenetherketone (PEAK), wie Polyphenylene, z. B. Poly[di-(oxy-1,4-phenylen)carbonyl-1,4-phenylen] (Polyetheretherketon, PEEK), Poly[oxy-1,4-phenylenoxy-di-(1,4-phenylencarbonyl-1,4-phenylen] (Polyetheretherketonketon, PEEKK) oder Poly[-oxy-1,4-phenylencarbonyl-1,4-phenylenoxy-di-(1,4-phenylencarbonyl)-1,4-phenylen] (Polyetherketonetherketonketon, PEKEKK) zur Anwendung kommen, oder auch Polyarylensulfide, wie Polyphenylensulfid (PPS), zur Anwendung kommen.

Was den Werkstoff PTFE betrifft, so weist dieser höchste thermische Beständigkeiten auf. Ein merklicher Abbau tritt erst bei Temperaturen über 350 °C ein. Die obere Dauergebrauchstemperatur liegt bei 250 °C. Allerdings unterscheidet sich PTFE auch grundlegend vom Schmelzverhalten anderer Polymere, indem es sich bei Temperaturen im Bereich von 325 °C bis 340 °C bei Ablauf einer Volumenvergrößerung von etwa 30 Prozent aus einer weißen kristallinen in eine transparente amorphe Substanz verwandelt und selbst bei Temperaturen über 400 °C formstabil bleibt. Zur Herstellung von Rohren und Schläuchen müssen daher spezielle Techniken angewendet werden, z. B. die Herstellung von extrusionsfähigen und gegebenenfalls später sinterbaren pastösen Massen, die neben PTFE-Teilchen Füllstoffe und Plastifikatoren, wie unter Compoundbildung andere Polymere, z. B. Polyamide, enthalten können. Weniger aufwändig ist jedoch eine Beschichtung, insbesondere eine Innenbeschichtung der Rohrleitung in ihrem zweiten - gegebenenfalls auch im ersten - Längenabschnitt der Rohrleitung, mit PTFE.

Besonders bevorzugt als mögliche Polymer-Materialien für den zweiten Längenabschnitt sind auch Polyphthalamide (PPA), insbesondere Hochtemperatur-Polyphthalamide (HT-PPA). Dabei handelt es sich um eine Gruppe von Polyamiden, die aus den aromatischen Monomeren Tere- und Isophthalsäure (HOOC-C₆H₄-COOH) und Hexamethylendiamin (6 C-Atome) hergestellt werden, und die unter den Polyamiden die höchsten Temperaturbeständigkeiten aufweisen. Die Dauerwärmebeständigkeit liegt im Bereich von etwa 150 °C bis maximal 160 °C. Die Feuchtigkeitsaufnahme liegt im Bereich von nur etwa 0,1 Prozent bis 0,3 Prozent.

Ein Vertreter der oben erwähnten Polyamid-Gruppe, die mit PA Z1 Z2 gekennzeichnet wird, ist beispielsweise auch PA 612, welches beispielsweise unter dem Namen VESTAMID® D im Handel ist. Dieses Polyamid ist das Polykondensationsprodukt aus 1,6-Hexamethylendiamin und 1,12-Dodecandisäure. Wenn auch die Carbonamidgruppen-Konzentration in PA 612 geringfügig höher ist als in Polyamid 12, so ist sie doch deutlich niedriger als bei PA 6 bzw. PA 66. Dadurch haben Teile aus PA 612 fast unverändert die oben genannten vorteilhaften Eigenschaften von PA 12. Jedoch weist PA 612 als zusätzlichen Vorteil im Vergleich mit PA 12 einen fast um 40 °C höheren Schmelzpunkt auf und hat so eine bessere Wärmeformbeständigkeit. Die Dauerwärmebeständigkeit liegt im Bereich von etwa 130 °C bis 140 °C. Auch die Rückstell-Elastizität von PA 612 ist bei hoher Nassfestigkeit höher als bei PA 12. Auch PA 612 kann daher mit Vorteil als Polymer im Material des zweiten Längenabschnitts eingesetzt werden.

In diesem Zusammenhang ist zu erwähnen, dass erfindungsgemäß auch noch Polymere unter dem Begriff "Hochleistungskunststoffe" ("High Performance Polymers") subsumiert werden, die eine Dauerwärmebeständigkeit im Bereich von etwa 130 °C bis 140 °C aufweisen, wobei - wie bereits aus den vorstehenden Ausführungen hervorgeht - eine hohe Wärmebeständigkeit nicht das einzige Kriterium für eine Eignung eines Materials als Polymer für den zweiten Längenabschnitt der Rohrleitung darstellt. Die erwähnten Hochleistungskunststoffe weisen jedoch in der Mehrzahl nicht nur im Hinblick auf die maximale Temperatur, sondern auch im Hinblick auf die minimale Temperatur, die chemische Beständigkeit und/oder den Druck eine höhere Beanspruchbarkeit auf als technische Kunststoffe.

Bei einer Anwendung der erfindungsgemäßen beheizbaren Fluidleitung in einem SCR-Katalysatorsystem kann es insbesondere vorteilhaft sein, die gesamte Fluidleitung zwischen dem Tank und der Einspritzeinrichtung in mindestens drei Längenabschnitte zu unterteilen, wobei jeweils in der Nähe des Tanks und in der Nähe der Einspritzeinrichtung kürzere Längenabschnitte angeordnet sind, die das zweite polymerhaltige Material enthalten, und wobei der mittlere, längere Längenabschnitt der Leitung das erste polymerhaltige Material enthält.

Die Längenabschnitte können einerseits unlösbar miteinander - d. h. nur zerstörend voneinander trennbar - verbunden sein. Andererseits besteht auch die vorteilhafte Möglichkeit, dass die Längenabschnitte lösbar, insbesondere über jeweils eine Verbindungsanordnung miteinander verbunden sind, die aus zwei Kupplungsteilen besteht, welche jeweils eines von zwei korrespondierenden, miteinander kuppelbaren und mit jeweils einer der zwei zu verbindenden Längenabschnitte verbundenen Fluidkupplungsteilen sowie jeweils mindestens ein ElektroSteckverbinderteil derart aufweisen, dass durch Zusammenfügen bzw. Trennen der beiden Kupplungsteile die Fluidkupplungsteile einerseits und die Elektro-Steckverbinderteile andererseits gemeinsam, d. h. gleichzeitig, miteinander verbindbar bzw. voneinander trennbar sind.

Der Heizleiter kann in einer erfindungsgemäßen Fluidleitung insbesondere adaptiv - sowohl innen-, als auch außenliegend mit der Rohrleitung verbunden sein. Mit einer solchen Anordnung verbinden sich dann als Vorteile bei der Litzenanbringung, dass die Bildung von Varianten unabhängig vom Extrusionsprozess des Rohres ist und dass die Wandstärke des Rohres unabhängig vom Leiter gewählt werden kann. Auf diese Weise sind mit Vorteil einfache Längen- und Widerstandsanpassungen möglich, z. B. kann in kurzen Leitungen eine andere Litzensteigung vorgesehen werden als in langen Leitungen. Auch ist der Freilegungsaufwand gering gegenüber integrierten Ausführungen wie sie eingangs beschrieben wurden. Schließlich besteht vorteilhafterweise ein geringer Verbindungsaufwand beim Anbringen von Konnektoren.

Entsprechend einem Verfahren zur Herstellung einer konfektionierten beheizbaren Fluidleitung der eingangs genannten Art ist vorgesehen, dass zuerst ein Rohrleitungsstrang kontinuierlich mit dem mindestens einen Heizleiter bewickelt wird, wonach zunächst das solchermaßen vorgefertigte Zwischenprodukt zu Fluidleitungsstücken abgelängt wird, welche jeweils endseitig derart bemessene Überlängen-Abschnitte aufweisen, dass der Heizleiter von jedem dieser Überlängen-Abschnitte mit einer Länge abgewickelt werden kann, die es ermöglicht, den Heizleiter auf ein Verbinderteil aufzuwickeln, wonach dann jeweils nach einem Abwickeln des Heizleiters von dem Überlängen-Abschnitt dieser Überlängen-Abschnitt von dem Fluidleitungsstück abgetrennt wird, das so entstandene Rohrleitungsende mit dem Verbinderteil verbunden und das Verbinderteil zumindest teilweise mit dem Heizleiter bewickelt wird.

Mit anderen Worten wird die Rohrleitung also zunächst kontinuierlich als Strang - praktisch als "Endlos-Leitung" - mit dem Heizleiter (oder auch mit zwei oder mehr Heizleitern) bewickelt und danach wird bzw. werden der oder die Heizleiter mit einer Umhüllung, insbesondere in Form mindestens einer schraubenlinienförmigen Umwicklung aus einem selbstklebenden Band und/oder einem Wellrohr, abgedeckt. Der Rohrleitungsstrang kann dabei zur Herstellung der erfindungsgemäßen Leitung aus den mindestens zwei Längenabschnitten gebildet sein, die hinsichtlich ihrer Material- und Gebrauchseigenschaften unterschiedlich ausgebildet und vorzugsweise unlösbar miteinander verbunden sind. Dadurch entsteht ein noch unkonfektioniertes Zwischenprodukt. Zum Konfektionieren, also zum Verbinden mit mindestens einem Verbinderteil, vorzugsweise mit zwei Verbinderteilen, wird dann das Zwischenprodukt zu Fluidleitungsstücken abgelängt, die eine bestimmte Überlänge aufweisen. Die Überlänge ist derart bemessen, dass von den Endabschnitten der Fluidleitungsstücke der bzw. die Heizleiter mit einer solchen Länge abgewickelt werden können, dass diese abgewickelten Heizleiterenden anschließend auf das jeweilige Verbinderteil aufgewickelt werden können. Die überstehenden, von den Heizleitern "befreiten" - als Überlängen-Abschnitte bezeichneten - Enden der Rohrleitung werden stattdessen dann als "Verschnitt" abgetrennt. Jetzt können jeweils die freien Rohrleitungsenden mit dem Verbinderteil, z. B. einem Kupplungsteil und/oder einem Leitungsverbinder, verbunden werden. Durch diese vorteilhafte erfindungsgemäße Verfahrensweise haben die Heizleiter einen über die gesamte Fluidleitungslänge - insbesondere einschließlich der Verbinderteile - durchgehenden Verlauf, ohne Unterbrechungen und damit auch ohne zusätzlich notwendige Heizleiter-Verbindungsteile, wie z. B. Crimpverbinder zwischen einem separaten Heizleiterabschnitt auf der Rohrleitung und einem separaten Heizleiterabschnitt auf dem Verbinderteil. Das erfindungsgemäße Verfahren empfiehlt sich wegen des Verschnitts besonders für die Leitungsabschnitte einer erfindungsgemäßen Fluidleitung, welche aus dem technischen Kunststoff bestehen.

Allerdings kann die Konfektionierung einer erfindungsgemäßen Fluidleitung bedarfsweise auch nach bekannter Art, d. h. durch diskontinuierliche Bewicklung von mit Konnektoren verbundenen Leitungsstücken erfolgen. Hierbei kann durch eine gleichzeitige Litzenadaption an mehreren Komponenten der Konnektierungsaufwand gering gehalten werden.

Weitere vorteilhafte Ausgestaltungsmerkmale der Erfindung sind in den Unteransprüchen sowie der folgenden Beschreibung enthalten.

Anhand von bevorzugten Ausführungsbeispielen soll im Folgenden die Erfindung näher erläutert werden. Dabei zeigen:
- Fig. 1: ein Leitungsstück einer ersten Ausführung einer beheizbaren Fluidleitung in einer halb über ihre axiale Länge geschnittenen Darstellung,
- Fig. 2a und 2b: schematische Prinzip-Darstellungen zu zwei Varianten einer erfindungsgemäßen Verwendung der beheizbaren Fluidleitung,
- Fig. 3 bis 6: verschiedene Schritte eines Verfahrens zur Herstellung einer konfektionierten, insbesondere erfindungsgemäßen, beheizbaren Fluidleitung,
- Fig. 7 und 8: zwei weitere Ausführungen einer beheizbaren Fluidleitung im Längsschnitt,
- Fig. 9: eine schematisierte Darstellung noch einer weiteren Ausführung einer beheizbaren Fluidleitung,
- Fig. 10 und 11: im Längsschnitt, zwei bevorzugte Ausführungen von Verbinderteilen, insbesondere von Leitungsverbindern, einer beheizbaren Fluidleitung,
- Fig. 12: eine bevorzugte Ausführung eines ersten Längenabschnitts einer beheizbaren Fluidleitung im Querschnitt,
- Fig. 13: eine bevorzugte Ausführung eines zweiten Längenabschnitts einer beheizbaren Fluidleitung im Querschnitt.

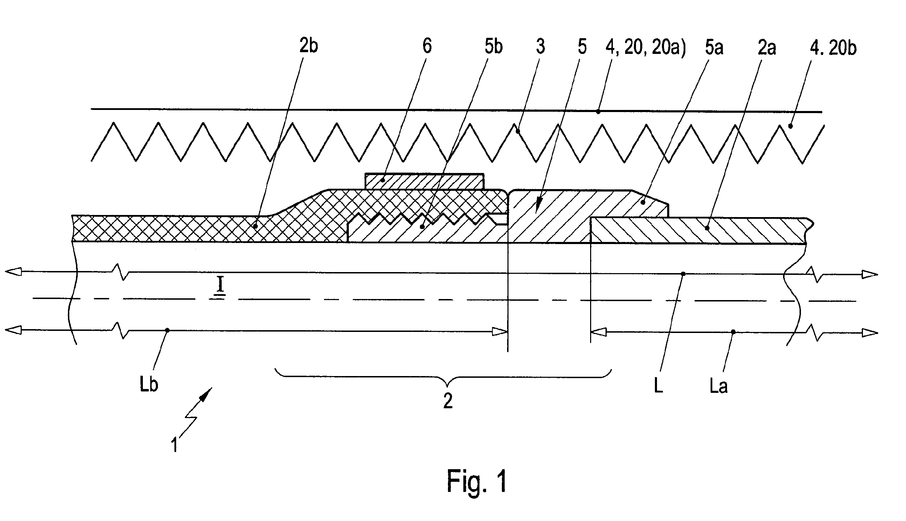

In den Figuren 1 bis 13 der Zeichnung sind jeweils gleiche Teile stets mit den gleichen Bezugszeichen versehen und werden daher in der Regel jeweils auch nur einmal beschrieben.

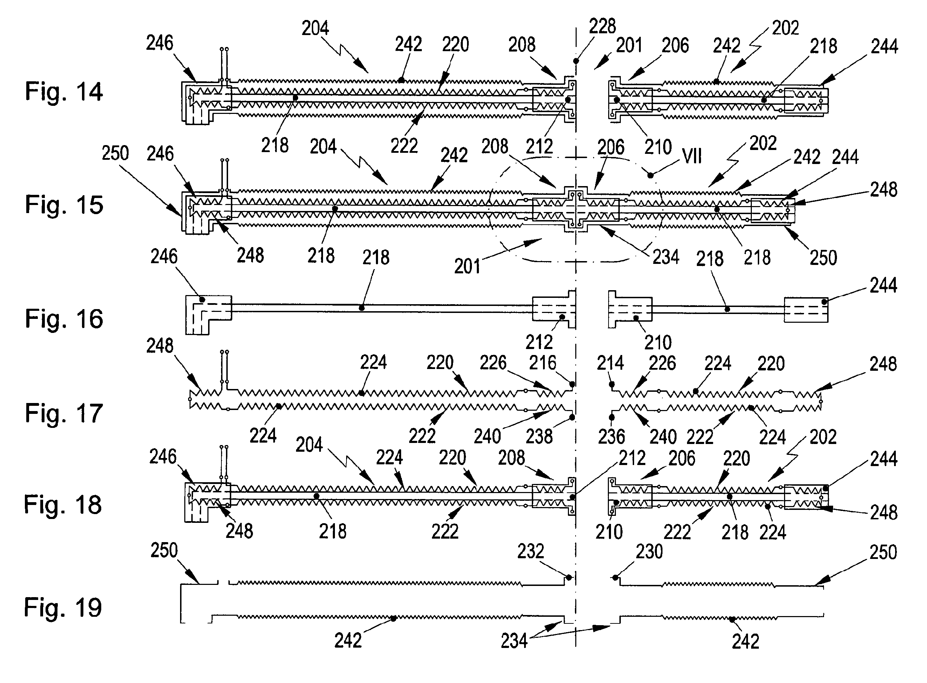

Der technische Schwerpunkt der Zeichnungsfiguren 14 bis 24 liegt in der Ausbildung einer Verbindungsanordnung. Auch in den Figuren 14 bis 24 sind jeweils gleiche Teile - jedoch abweichend von den Figuren 1 bis 13 - mit den gleichen Bezugszeichen versehen und werden daher bei der entsprechenden Figurenbeschreibung nur einmal beschrieben. Diese Figuren zeigen:
- Fig. 14: eine stark schematische Längsschnittdarstellung von zwei konfektionierten, beheizbaren Längenabschnitten einer Fluidleitung mit einer Verbindungsanordnung in einem entkuppelten Zustand vor oder nach dem Verbinden,
- Fig. 15: die gleiche Anordnung wie in Fig. 14, jedoch im gekuppelten Zustand der Verbindungsanordnung,
- Fig. 16 bis 19: gesonderte Darstellungen von Einzelkomponenten der Gesamtanordnung gemäß Fig. 14,

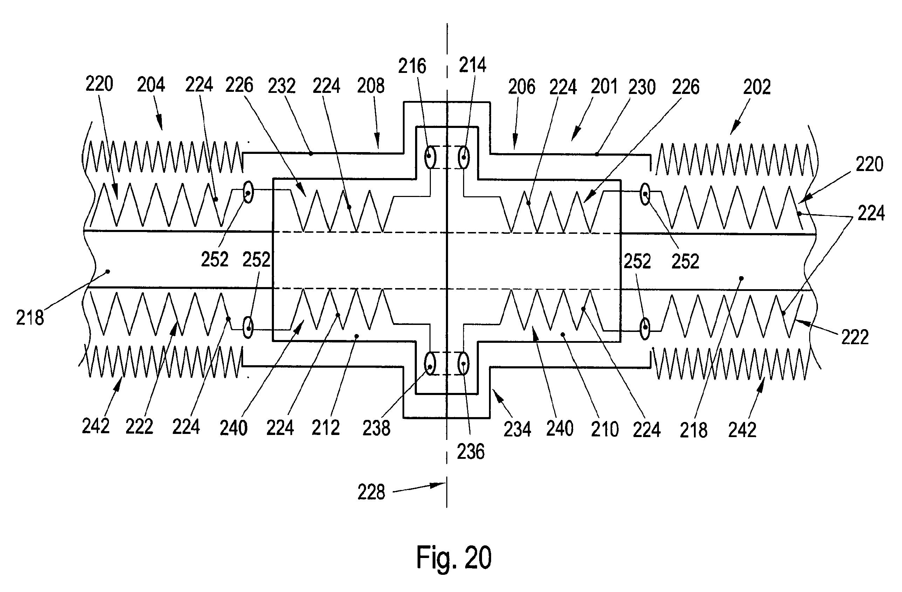

- Fig. 20: eine Ausschnittvergrößerung aus Fig. 15 im Bereich VII der Verbindungsanordnung,

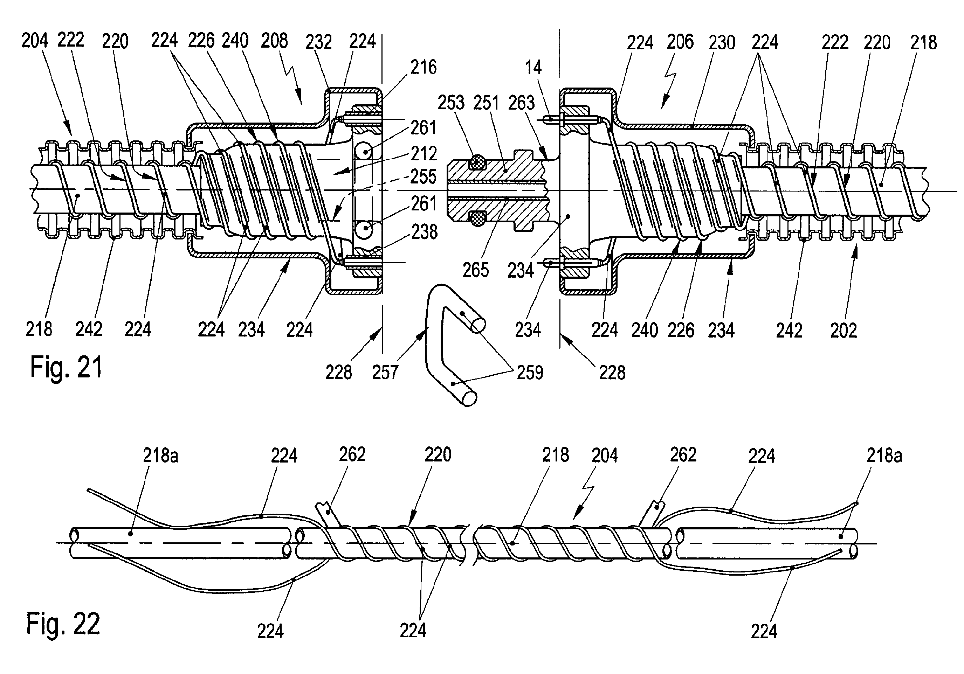

- Fig. 21: ein konkretes Ausführungsbeispiel der Verbindungsanordnung im entkuppelten Zustand ähnlich Fig. 14,

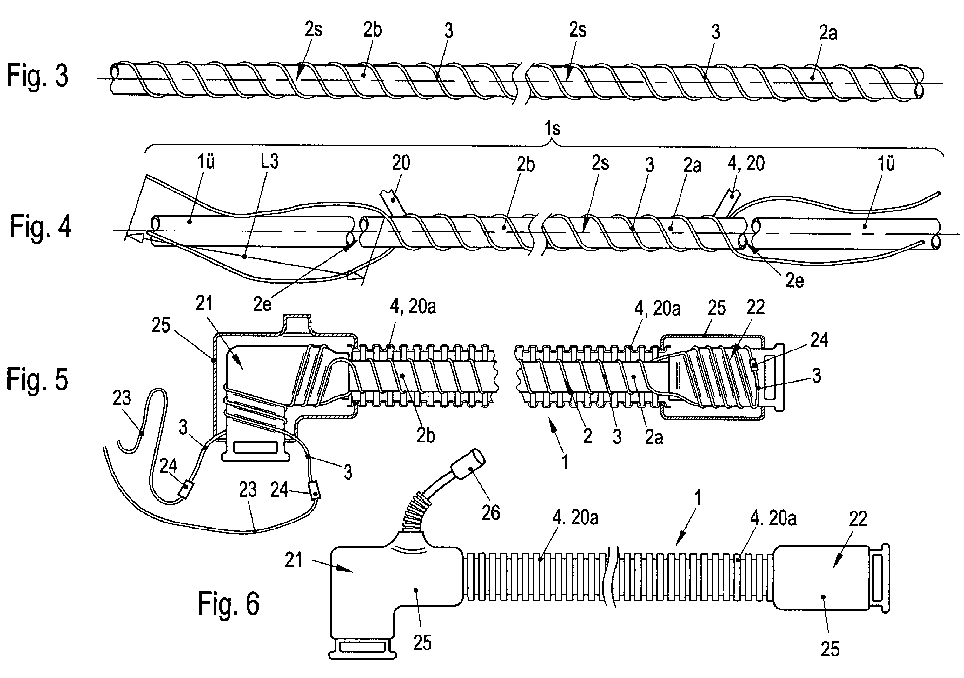

- Fig. 22: ähnlich wie Fig. 4, eine gekürzte Seitenansicht einer beheizbaren Fluidleitung in einem Zustand während der Fertigung zur Erläuterung eines vorteilhaften Fertigungsablaufes,

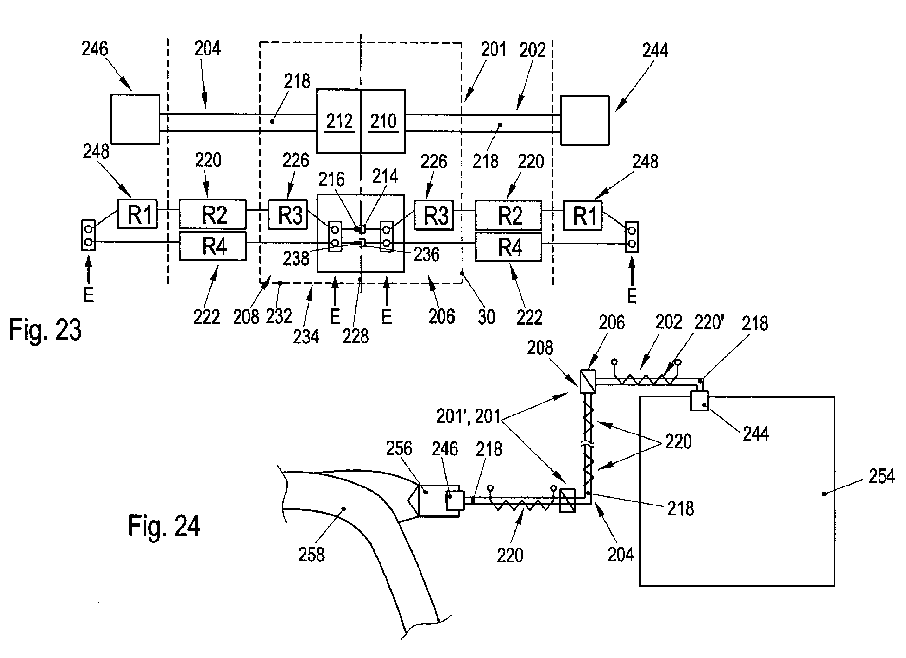

- Fig. 23: eine Verbindungsanordnung in einer Prinzip-Darstellung nach Art eines Blockschaltbildes in einer vorteilhaften Ausführung und Verschaltung von elektrischen Heizelementen und
- Fig. 24: eine schematische Prinzip-Darstellung zur bevorzugten Verwendung der Verbindungsanordnung.

Wie sich zunächst aus Fig. 1 ergibt, weist eine beheizbare Fluidleitung 1 mindestens eine Rohrleitung 2 und mindestens einen sich über mindestens einen Teilbereich der Rohrleitungslänge L erstreckenden elektrischen Heizleiter 3 auf. Der Heizleiter 3, bei dem es sich insbesondere um eine Litze handeln kann, ist nur stark vereinfacht als Zickzacklinie dargestellt. Der Heizleiter kann bevorzugt schraubenlinienförmig über die Mantelfläche der Rohrleitung 2 gewickelt oder auch durch das Innere I der Rohrleitung 2 geführt sein. Die Heizlitzen benötigen gegebenenfalls temperaturfeste Materialien für ihre Ummantelung, wobei dafür Fluorpolymere besonders geeignet erscheinen.

In vorteilhafter Ausgestaltung ist in der Fluidleitung 1 die Rohrleitung 2 gemeinsam mit dem Heizleiter 3 von einer ebenfalls nur schematisch angedeuteten Leitungsumhüllung 4 umschlossen. Vorzugsweise kann diese Leitungsumhüllung 4 - wie nachstehend noch genauer ausgeführt wird - aus einem selbstklebenden Band 20 oder aus einem Wellrohr 20a oder teilweise aus einem selbstklebenden Band 20 und teilweise aus einem Wellrohr 20a bestehen. Das selbstklebende Band 20 dient dabei lediglich der Befestigung, während das Wellrohr 20a vorrangig eine Schutz- und Isolationsfunktion erfüllt. Des Weiteren kann auch eine Isolation, beispielsweise in Form eines Spalts 20b zwischen der Rohrleitung 2 und Wellrohr 20a, der gegebenenfalls mit zusätzlichem Isolationsmaterial ausgefüllt ist, vorgesehen sein.

Die Rohrleitung 2 weist mindestens zwei Längenabschnitte 2a, 2b auf. Der erste Längenabschnitt 2a hat eine Länge La, der zweite Längenabschnitt 2b hat eine Länge Lb. Die beiden Längenabschnitte 2a, 2b sind erfindungsgemäß hinsichtlich ihrer Material- und Gebrauchseigenschaften unterschiedlich ausgebildet.

Was die konstruktive Gestalt, insbesondere die geometrischen Eigenschaften der Rohrleitung 2 angeht, so kann diese generell einen kreisförmigen Querschitt aufweisen, wobei der Querschnitt der Rohrleitung 2 erfindungsgemäß zumindest bereichsweise von der Kreisform abweichen kann, indem er beispielsweise oval ausgebildet ist.

Der erste Längenabschnitt 2a besteht aus einem ersten polymerhaltigen Material, welches einen technischen Kunststoff, also einen Kunststoff mit einer Dauergebrauchstemperatur zwischen 90 °C und 140 °C, enthält. Dies schließt ein, dass das Material ausschließlich aus diesem Kunststoff besteht. Der Werkstoff des ersten polymerhaltigen Materials kann mit Vorteil ein Polyamid, insbesondere PA11 oder PA12, sein. Der erste Längenabschnitt 2a kann dabei bevorzugt als Kunststoff-Formrohr ausgebildet sein, wobei auch z. B. ein durch spezielle Füllstoffe verstärkter Kunststoff als polymeres Material zum Einsatz kommen kann.

Ähnliche Materialien können ebenso für ein die Leitungsumhüllung 4 bildendes Wellrohr 20a vorgesehen werden, allerdings ist dieses mechanisch wenig belastet, so dass hier auch geringere Anforderungen an die Materialqualität gestellt werden können und gegebenenfalls auch Massenkunststoffe eingesetzt werden können. Das Wellrohr 20a kann also aus einem technischen Kunststoff oder zumindest teilweise - in Längenabschnitten mit höherer Temperaturbelastung - wie der zweite Längenabschnitt 2b der Rohrleitung ebenfalls aus einem Hochleistungskunststoff gebildet ist. Auch der Einsatz eines flexiblen Materials ist für das Wellrohr 20a mit Vorteil möglich.

Der zweite Längenabschnitt 2b besteht aus einem zweiten polymerhaltigen Material, welches flexibler als das erste Material ist und/oder einen Hochleistungskunststoff, also einen Kunststoff mit einer Dauergebrauchstemperatur von über 140 °C, enthält. Wie bereits erwähnt, kann das zweite polymerhaltige Material bevorzugt z. B. ein Fluorpolymer, wie PTFE, ein Polyarylenetherketon, wie PEEK, oder ein Polyarylensulfid, wie PPS, enthalten. Dies schließt ein, dass das Material ausschließlich aus diesem Polymer besteht. Die Längenabschnitte 2a, 2b, vorzugsweise ein schlauchartig ausgeführter zweiter Längenabschnitt 2b, können jedoch auch neben dem jeweiligen Polymer weitere Materialkomponenten enthalten. So können sie mehrschichtig, z. B. mit einem Gewebe verstärkt, ausgeführt sein. Als Polymer des zweiten Längenabschnitts 2b kann - im Falle einer schlauchartig flexiblen Ausbildung der Rohrleitung - insbesondere EPDM oder EPM als elastomerer Werkstoff zum Einsatz kommen.

Gemäß der Ausführung in Fig. 1 ist vorgesehen, dass die unterschiedlichen Längenabschnitte 2a, 2b unlösbar miteinander verbunden sind. In der Verbindungsstelle der Abschnitte ist dabei ein Adapterteil 5 vorgesehen. Das Adapterteil 5 kann bevorzugt in materialökonomischer Weise aus einem technischen Kunststoff oder auch leitend, z. B. aus Edelstahl, ausgeführt sein. Es kann auch mit einer (nicht dargestellten) Wärmeleithülse umgeben sein.

In der dargestellten Ausführung weist das Adapterteil 5 einseitig einen Schweißanschluss 5a zur Verbindung mit dem insbesondere als Kunststoffrohr ausgebildeten ersten Längenabschnitt 2a und anderseitig ein Dornprofil 5b zur Verbindung mit dem insbesondere als Schlauch ausgebildeten zweiten Längenabschnitt 2b auf. Der Schlauch ist auf dem Dornprofil 5b zusätzlich durch eine Quetschhülse 6 gesichert. Das Adapterteil 5 könnte auch derart ausgeführt sein, dass ein beidseitiges Aufdornen oder ein beidseitiges Verschweißen, insbesondere ein Laserverschweißen, der Längenabschnitte 2a, 2b möglich ist. In dem Fall, dass der Heizleiter 3 für eine Innenbeheizung durch das Innere I der Rohrleitung 2 geführt ist, sollte das Adapterteil 5 innen mindestens einseitig hinterschnittfrei sein, um den Heizleiter 3 beim Durchführen durch das Innere I der Rohrleitung montagetechnisch nicht zu behindern.

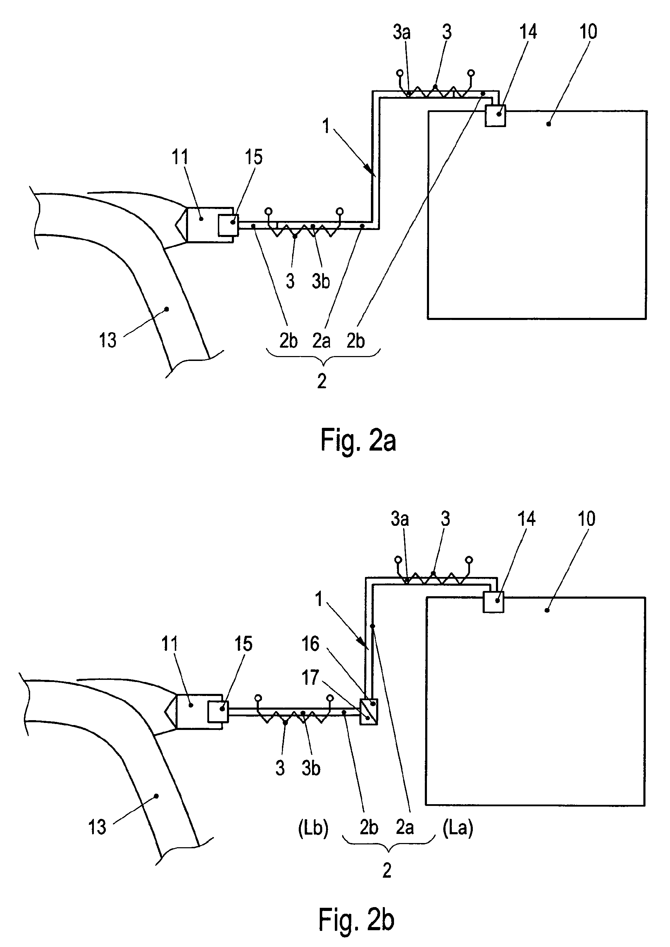

In Fig. 2a ist eine erste Variante einer erfindungsgemäßen Verwendung der erfindungsgemäßen Fluidleitung 1 veranschaulicht. Es handelt sich um ein SCR-Katalysatorsystem eines Fahrzeug-Verbrennungsmotors, wobei ein Fluid-Tank 10 mit einer Einspritzeinrichtung 11 zu verbinden ist, die das Fluid, bei dieser Anwendung eine wässrige Harnstofflösung, zur selektiven, katalytischen Reduktion von Stickoxiden in einen Abgasstrang 13 des nicht dargestellten Verbrennungsmotors einspritzt.

Hierbei wird unter Einsatz einer Fluidleitung 1 die Distanz zwischen dem Tank 10 und der Einspritzeinrichtung 11 überbrückt. Dabei ist vorgesehen, dass die gesamte Leitungsverbindung zwischen dem Tank 10 und der Einspritzeinrichtung 11 in drei Abschnitte unterteilt ist, wobei jeweils in der Nähe des Tanks 10 und in der Nähe der Einspritzeinrichtung 11 "zweite" Längenabschnitte 2b angeordnet sind, die aus dem polymerhaltigen Material bestehen, welches z. B. gummielastisch flexibel ist und/oder einen Hochleistungskunststoff enthält. Dazwischen ist ein "erster" Längenabschnitt 2a angeordnet, der aus einem polymerhaltigen Material besteht, welches einen technischen Kunststoff enthält. Das mittlere, längere Leitungsstück besteht also aus einem preisgünstigem Material, während für die äußeren, kürzeren Leitungsstücke hochwertigeres, insbesondere für höhere Temperaturen und/oder höheren Druck geeignetes Material verwendet wird. Die Längenabschnitte 2b, 2a, 2b sind unlösbar - beispielsweise wie unter Bezugnahme auf Fig. 1 vorstehend dargestellt - miteinander verbunden. An den Enden der Leitung 1 sind jeweils ein Verbinderteil (Fluidkupplungsteil 14) zum Tank 10 und ein Verbinderteil (Fluidkupplungsteil 15) zur Einspritzeinrichtung 11 vorgesehen. Die Beheizung der Fluidleitung 1 durch Heizleiter 3 erfolgt in zwei unterschiedlichen Teilbereichen 3a, 3b auf der Rohrleitung 2.

In Fig. 2b ist eine zweite Variante einer erfindungsgemäßen Verwendung der Fluidleitung 1 veranschaulicht. Diese unterscheidet sich vom Wesen her nur wenig von der ersten Variante. Auch hier wird unter Einsatz einer Fluidleitung 1 die Distanz zwischen dem Tank 10 und der Einspritzeinrichtung 11 eines SCR-Katalysatorsystems eines Fahrzeug-Verbrennungsmotors überbrückt. Dabei ist jedoch vorgesehen, dass die Leitungsverbindung zwischen dem Tank 10 und der Einspritzeinrichtung 11 nur in zwei Abschnitte unterteilt ist, wobei in der Nähe des Tanks 10 der erste Längenabschnitt 2a angeordnet ist, der aus dem polymerhaltigen Material besteht, welches einen technischen Kunststoff enthält, und in der Nähe der Einspritzeinrichtung 11 der zweite Längenabschnitt 2b, der aus dem flexibleren und/oder einen Hochleistungskunststoff enthaltenden polymerhaltigen Material besteht. Die Längenabschnitte 2a, 2b sind lösbar, über jeweils ein Fluidkupplungsteil 16 am Ende des ersten Längenabschnitts 2a und ein komplementäres Fluidkupplungsteil 17 am Ende des zweiten Längenabschnitts 2b miteinander verbunden, die in der Nähe der Einspritzeinrichtung 11 liegen.

Diese Variante ist montagetechnisch besonders günstig. In aller Regel wird nämlich in einem derartigen System der Tank 10 zuerst montiert. Dazu ist es vorteilhaft, den Tank 10 vor oder bei Montage mit dem ersten Längenabschnitt 2a der Fluidleitung 1 zu verbinden, was über den Leitungsverbinder 14 realisiert werden kann, der sich einendig am ersten Längenabschnitts 2b befindet. Bei der weiteren Fahrzeugmontage ist dann häufig der Tank-Anschluss nicht mehr zugänglich. Dennoch kann die Einspritzeinrichtung 11 über den schon zuvor montierten ersten Längenabschnitt 2a der Fluidleitung angeschlossen werden, was auf einfache und schnelle Weise über den zweiten Längenabschnitt 2b der Fluidleitung 1 erfolgen kann, indem lediglich die Fluidkupplungsteile 16, 17 zusammengesteckt zu werden brauchen. Eine derartige Teilung der Leitungsverbindung zwischen dem Tank 10 und der Einspritzeinrichtung 11 erleichtert also die Teile-Montage innerhalb des Fahrzeugs.

Bei beiden bevorzugten Anwendungen weisen die Längenabschnitte 2a, 2b der Fluidleitungen 1 unterschiedliche Längen auf. Dabei kann im Sinne eines materialökonomischen Werkstoffeinsatzes jeweils die Länge Lb des zweiten, kürzeren Längenabschnitts 2b oder die Summe der aus dem zweiten polymerhaltigen Material bestehenden Längenabschnitte 2b maximal 50 Prozent, bevorzugt maximal 20 Prozent der Länge La des ersten, längeren Längenabschnitts 2a oder gegebenenfalls der Summe aus mehreren aus dem ersten polymerhaltigen Material bestehenden Längenabschnitten 2a und/oder mindestens 200 mm bis 500 mm betragen.

Die Verbinderteile 14, 15 und die Fluidkupplungsteile 16, 17 können aus einem technischen oder aus einem Hochleistungskunststoff oder aus Metall hergestellt werden. Das Verbinderteil 15, insbesondere ein sogenannter QC - "Quick Connector" -, an der Heißseite des Abgasstrangs 11 sollte aber bevorzugt aus Metall gefertigt sein, z. B. wegen der ebenfalls erforderlichen Beständigkeit gegenüber der Katalysatorlösung aus Edelstahl.

Ein Verfahren zur Herstellung einer konfektionierten beheizbaren Fluidleitung wird in seinen verschiedenen Schritten in Fig. 3 bis 6 veranschaulicht.

Dabei ist - wie Fig. 3 zeigt - vorgesehen, dass zuerst ein Rohrleitungsstrang 2s kontinuierlich mit dem mindestens einen Heizleiter 3 bewickelt und danach der Heizleiter 3 mit einer Leitungsumhüllung 4 abgedeckt wird. Letzteres zeigt bereits Fig. 4.

In Fig. 3 und 4 ist jeweils rechts ein Rohrleitungstrang 2s gezeigt, der aus dem Material zur Bildung des ersten Längenabschnitts 2a besteht, und links ein Rohrleitungstrang 2s, der aus dem Material zur Bildung des zweiten Längenabschnitts 2b besteht.

Die Leitungsumhüllung 4 kann z. B. - wie dargestellt - zunächst durch eine schraubenlinienförmige Umwicklung des Rohrleitungsstrangs 2s mit einem selbstklebenden Band 20 hergestellt werden.

Fig. 4 zeigt auch, dass das solchermaßen vorgefertigte Zwischenprodukt zu Fluidleitungsstücken 1s abgelängt wird, welche jeweils endseitig derart bemessene Überlängen-Abschnitte 1ü aufweisen, dass der Heizleiter 3 von jedem dieser Überlängen-Abschnitte 1ü mit einer Länge L3 abgewickelt werden kann, die es ermöglicht, den Heizleiter 3 auf ein Verbinderteil 21, 22 aufzuwickeln. Dadurch entsteht ein Litzenvorrat für die Bewicklung des jeweiligen Verbinderteils 21, 22, damit dieses später ebenfalls beheizt werden kann. Derartige Verbinderteile 21, 22 sind in Fig. 5 dargestellt.

Nach dem Abwickeln der genannten Länge L3 des Heizleiters 3 von dem Überlängen-Abschnitt 1ü, wird dieser Überlängen-Abschnitt 1ü von dem Fluidleitungsstück 1 s abgetrennt. Dies ist bereits in Fig. 4 gezeigt. Das jeweils so entstandene Rohrleitungsende 2e wird dann mit dem Verbinderteil 21, 22 verbunden, und das Verbinderteil 21, 22 wird mit dem Heizleiter 3 bewickelt. Dabei wird der durch die abgewickelte Länge L3 des Heizleiters gebildete Litzenvorrat auf die Verbinder 21, 22 aufgebracht, wobei dies beispielsweise mit Hilfe von (nicht bezeichneten) Formelementen und/oder einem selbstklebenden Band geschehen kann. Die offenen Enden der Litzen werden geschlossen (rechte Seite in Fig. 5) und/oder es wird ein Anschluss an einen Kaltleiter hergestellt. Dazu können Crimps 24 eingesetzt werden.

Zuletzt werden auf bzw. an den Verbinderteilen 21, 22 Schutzkappen 25 und - wie dies Fig. 6 zeigt - elektrische Stecker 26 montiert.

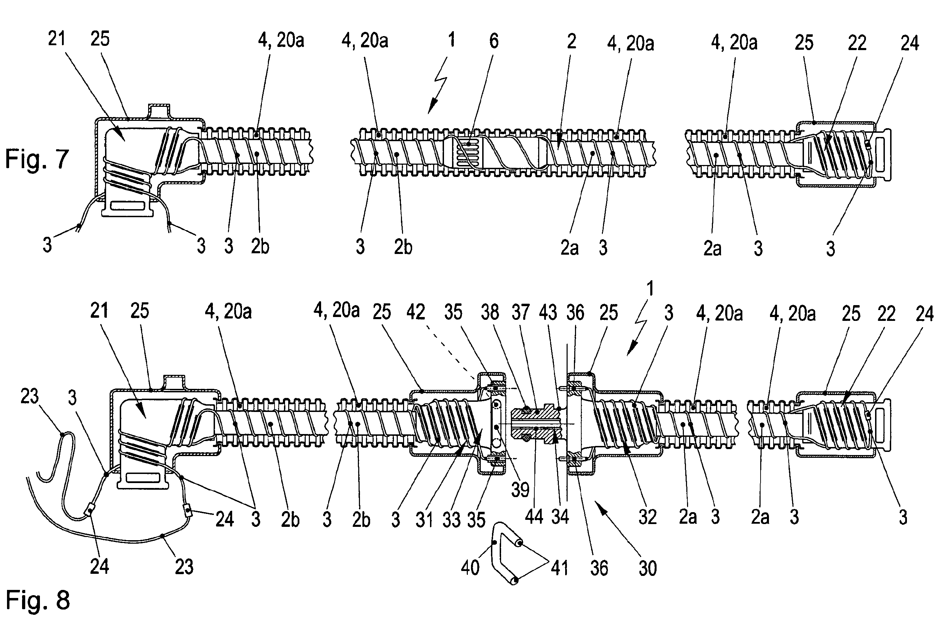

Die beiden in Fig. 7 und 8 dargestellten weiteren Ausführungen einer beheizbaren Fluidleitung 1 stellen Ergänzungen zur Darstellung in Fig. 5 dar, aus denen insbesondere hervorgeht, wie der Verbindungsbereich der Fluidleitung 1 gestaltet werden kann. Die konfektionierten Enden der Fluidleitung 1 in Fig. 7 und 8 sind jeweils identisch miteinander und auch identisch mit der Ausführung in Fig. 5.

Bei der Ausführung gemäß Fig. 7 ist der Verbindungsbereich in Analogie zur Darstellung in Fig. 1 als unlösbare Verbindung zwischen den beiden Längenabschnitten 2a, 2b realisiert, die hinsichtlich ihrer Material- und Gebrauchseigenschaften unterschiedlich ausgebildet sind. Im Hinblick auf den durch Fig. 5 veranschaulichten Verfahrensschritt der Herstellung der erfindungsgemäßen Leitung 1 ist dabei zu ergänzen, dass der Rohrleitungsstrang 2s auch bereits anfänglich aus den mindestens zwei miteinander verbundenen Längenabschnitten 2a, 2b gebildet sein kann, die hinsichtlich ihrer Material- und Gebrauchseigenschaften erfindungsgemäß unterschiedlich ausgebildet sind. Nach der Bewicklung und dem Ablängen des Rohrleitungsstrangs 2s kann auf die Fluidleitungsstücke 1 s vorzugsweise axial ein umfänglich geschlossenes Wellrohr 20a als weiterer Teil der Leitungsumhüllung 4 montiert werden, nachdem die beiden Längenabschnitte 2a, 2b, z. B. ein Rohrabschnitt 2a und ein Schlauchabschnitt 2b, zumindest fluidisch - oder aber, wie nachfolgend unter Bezugnahme auf Fig. 8 dargestellt wird - auch zusätzlich elektrisch verbunden wurden.

Im mittleren Teil der Fig. 8 ist exemplarisch eine bevorzugte Möglichkeit dargestellt, wie die unterschiedlichen Längenabschnitte 2a, 2b der erfindungsgemäßen Fluidleitung 1 lösbar miteinander verbunden werden können. Diese Verbindung kann insbesondere über jeweils eine Verbindungsanordnung 30 erfolgen, die aus zwei Kupplungsteilen 31, 32 besteht, die jeweils eines von zwei korrespondierenden, miteinander kuppelbaren und mit jeweils einem der beiden zu verbindenden Längenabschnitte 2a, 2b verbundenen Fluidkupplungsteilen 33, 34 sowie jeweils mindestens ein Elektro-Steckverbinderteil 35, 36 derart aufweisen, dass durch Zusammenfügen bzw. Trennen der beiden Kupplungsteile 31, 32 die Fluidkupplungsteile 33, 34 einerseits und die Elektro-Steckverbinderteile 35, 36 andererseits gemeinsam, d. h. gleichzeitig, verbindbar bzw. trennbar sind.

In dieser Verbindungsanordnung 30 weist das eine Fluidkupplungsteil 34 einen Steckeransatz 37 auf, der über eine Dichtung 38 umfangsgemäß abgedichtet in eine Muffenöffnung 39 des anderen Fluidkupplungsteils 33 einsteckbar ist. Zur Fixierung gegen Lösen dieser Steckverbindung kann eine U-förmige Halteklammer 40 mit zwei Halteschenkeln 41 durch Queröffnungen 42 im Bereich der Muffenöffnung 39 lösbar eingeschoben werden, wobei die Halteschenkel 41 der Halteklammer 40 durch eine z. B. als Ringnut ausgebildete Haltekontur 43 des Steckeransatzes 37 verlaufen. Zusätzlich ist in Fig. 8 beispielhaft dargestellt, dass innerhalb des Fluidkanals des Fluidkupplungsteils 34 eine Wärmeleithülse 44 angeordnet ist, um Wärme aus dem von den Heizleitern 3 umgebenen Bereich in den Bereich des Steckeransatzes 37 zu führen.

Die Elektro-Steckverbinderteile 35, 36 können an den Fluidkupplungsteilen 31, 32 oder alternativ innerhalb von Schutzkappen 25 der Fluidkupplungsteile gehaltert sein, die eine Kapselung der Verbindungsanordnung 30 bilden. Die Elektro-Steckverbinderteile 35, 36 können in das Kunststoffmaterial der Fluidkupplungsteile 31, 32 eingeformt oder in Aufnahmeöffnungen fixiert eingesetzt sein.

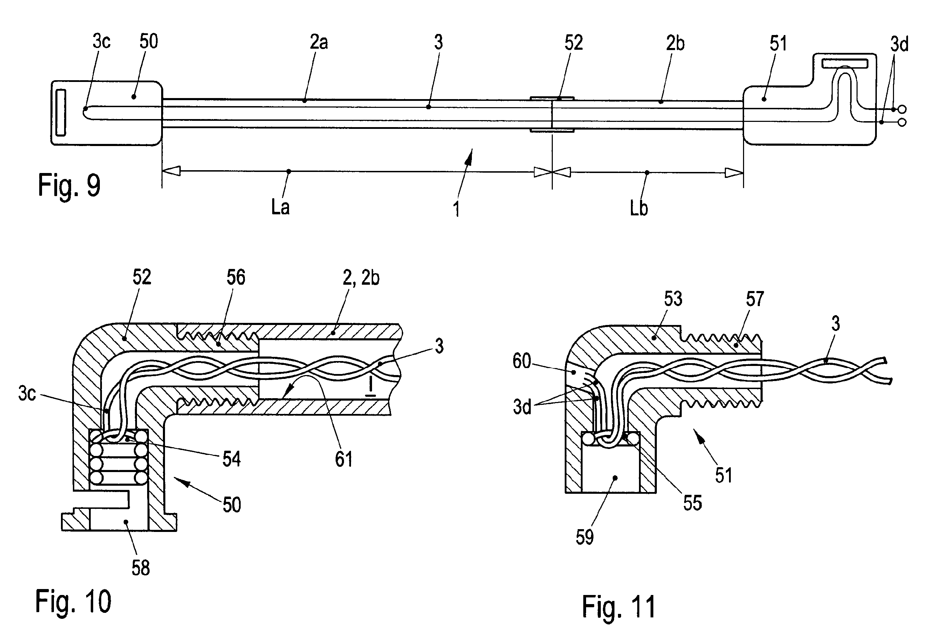

Insbesondere in Fällen, bei denen vorgesehen ist, dass der Heizleiter 3 adaptiv innenliegend mit der Rohrleitung 2 verbunden bzw. durch diese geführt ist, kann die Konfektionierung einer erfindungsgemäßen Fluidleitung 1 durch eine diskontinuierliche Litzenintegration, d. h. Ausrüstung von mit Verbinderteilen 50, 51 verbundenen Leitungsstücken, also Längenabschnitten 2a, 2b der erfindungsgemäßen Fluidleitung 1, erfolgen. Hierauf beziehen sich Fig. 9 bis 11. Fig. 9 stellt dabei das Prinzip einer Gesamtausführung einer derartigen beheizbaren Fluidleitung 1 dar, wobei insbesondere sowohl die Verbinderteile 50, 51, als auch die mit dem Bezugszeichen 52 bezeichnete Leitungsverbindung stark schematisiert sind. Im links in der Figur dargestellten Verbinderteil 50 bildet dabei der Heizleiter 3 eine Schlaufe 3c, während durch das rechts in der Figur dargestellte Verbinderteil 51 die freien Enden 3d des Heizleiters 3 geführt sind.

Fig. 10 und 11 zeigen im Detail zwei bevorzugte Ausführungen von Leitungsverbindern, vorzugsweise den bereits erwähnten QC, mit denen - als Verbinderteile 50, 51 - eine solche Fluidleitung 1 konfektioniert werden kann. Fig. 10 bezieht sich auf ein Verbinderteil 50, wie es in Fig. 9 links, und Fig. 11 auf ein Verbinderteil 51, wie es in Fig. 9 rechts, dargestellt ist. Charakteristisch für beide Verbinderteile 50, 51 ist, dass diese jeweils in einem Gehäuse 52, 53 Umlenkmittel 54, 55 für den jeweiligen Heizleiter 3 aufweisen. Die Umlenkmittel 54, 55 können jeweils einstückig mit einem Gehäuse 52, 53 oder - wie dargestellt - als Einsatzteile ausgebildet sein.

In Abweichung zur Darstellung in Fig. 9, wo links der Längenabschnitt 2a aus dem Material dargestellt ist, das den technischen Kunststoff enthält, sind die Gehäuse 52, 53 beider Verbinderteile 50, 51 - also auch das Verbinderteil 50 in Fig. 10 - derart ausgestaltet, dass sie auf einer Seite einen Dorn 56, 57 zum Befestigen eines beispielsweise einen zweiten Längenabschnitt 2b der erfindungsgemäßen Leitung 1 bildenden Schlauchstückes und anderseitig eine Steckereinstecköffnung 58, 59 aufweisen.

Das Gehäuse 53 des Verbinderteils 51, durch das die freien Enden 3d des Heizleiters 3 geführt sind, weist neben seinem Umlenkmittel 55 auch eine Öffnung 60 zum Herausführen der Heizleiterenden 3d auf.

Die Heizleiter 3 können bei dieser Ausführung der erfindungsgemäßen Fluidleitung 1 durch die Rohrleitung 2 bzw. deren Längenabschnitte 2a, 2b z. B. mit Druckluft durchgeschossen oder auf geeignete Weise eingefädelt werden. Für eine Montage auf die erste Art ist es dabei wichtig, dass die innere Wandung 61 der Rohrleitung 2 insbesondere glatt ist, damit sie in diesem Prozessschritt nur einen geringen Reibungswiderstand bildet. Dies ist sowohl für technische, als auch für Hochleistungskunststoffe problemlos realisierbar. Insbesondere eine PTFE-Innenbeschichtung oder eine Innenbeschichtung aus einem anderen Fluorpolymer ist diesbezüglich als besonders vorteilhaft anzusehen.

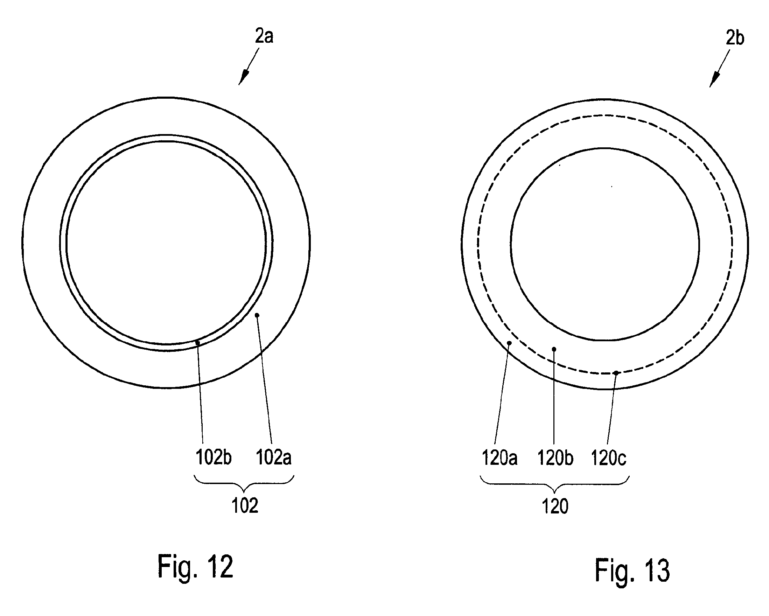

Fig. 12 zeigt eine bevorzugte Ausführung eines ersten Längenabschnitts 2a einer beheizbaren Fluidleitung 1 im Querschnitt. Bei dieser Ausführung ist die Rohrwandung 102 zweischichtig aufgebaut. Sie umfasst eine, vorzugsweise aus einem technischen Kunststoff, wie PA 12, bestehende Außenwandung 102a und eine vorzugsweise aus einem Fluorpolymer, wie PTFE, bestehende Innenwandung 102b. Die Innenwandung 102b kann bevorzugt im Sinne nur einer oberflächlichen Beschichtung der Außenwandung 102 vergleichsweise dünn, d. h. etwa mit einer Maximalwandstärke von 300 µm, ausgeführt werden, wobei die vergleichsweise dickere Außenwandung 102a die erforderliche mechanische Stabilität gewährleistet. Bei vorteilhaft materialökonomischer Herstellungsweise - im Hauptanteil aus dem technischen Kunststoff - besitzt der Längenabschnitt 2a eine beanspruchungsgerechte Wärme- und Kältebeständigkeit und, insbesondere aufgrund des fluorhaltigen Polymers der Innenwand 102b, eine erhöhte Beanspruchbarkeit durch das in ihm strömende Fluid, beispielsweise eine erhöhte chemische Beständigkeit, insbesondere im Hinblick auf Wasseraufnahme und/oder Hydrolyse. Der Reibungsbeiwert der Innenwandung 102a ist dabei im Hinblick auf Druckverluste im strömenden Medium und auch im Hinblick auf die vorstehend beschriebene Montagetechnik vorteilhaft klein.

Fig. 13 zeigt eine bevorzugte Ausführung eines zweiten Längenabschnitts 2b einer beheizbaren Fluidleitung 1 im Querschnitt. Bei dieser Ausführung ist die Rohrwandung 120 dreischichtig aufgebaut. Der zweite Längenabschnitt 2b ist als ein - im Vergleich mit dem ersten Längenabschnitt 2a - für höhere Beanspruchungen, insbesondere für höheren Innendruck sowie höhere und/oder niedrigere Temperaturen, ausgelegtes, ggf. flexibles Rohrstück ausgeführt. Die Wandung 120 umfasst eine, vorzugsweise aus einem Hochleistungskunststoff, wie insbesondere gefülltem PPA, bestehende Außenwandung 120a und eine vorzugsweise aus einem Fluorpolymer, wie ETFE, bestehende Innenwandung 120b. Dazwischen befindet sich als Verstärkung 120c eine beispielsweise aus Aramid bestehende Gewebeschicht. Die Verstärkung könnte auch in die Außenwandung 120a oder die Innenwandung 120b eingebettet sein oder ganz fehlen. Bei insbesondere vorteilhaft materialökonomischer Herstellungsweise der Außenwandung 120b aus dem vergleichsweise kostengünstigen Hochleistungskunststoff PPA (oder auch einem technischen bzw. Standardkunststoff, wenn nur die chemische Beanspruchung von Bedeutung ist) besitzt der Längenabschnitt 2b eine erhöhte beanspruchungsgerechte Wärme- und Kältebeständigkeit sowie, aufgrund des insbesondere innenseitig angeordneten Fluorcarbons, eine erhöhte Beanspruchbarkeit durch das in ihm strömende Fluid, beispielsweise eine erhöhte chemische Beständigkeit, insbesondere im Hinblick auf Wasseraufnahme und/oder Hydrolyse. Der Reibungsbeiwert der Innenwandung 120a ist dabei im Hinblick auf Druckverluste im strömenden Medium und im Hinblick auf die vorstehend erwähnte Montagetechnik vorteilhaft klein. Durch die Verstärkung 120c können erhöhte Drücke, wie Gefrierdrücke, und/oder auch Druckpulsationen in der erfindungsgemäßen Fluidleitung 1 wirkungsvoll kompensiert werden.

Hinsichtlich weiterer Details, welche die Möglichkeiten betreffen, die unter Bezugnahme auf Fig. 8 beschriebene bevorzugte lösbare Verbindungsanordnung für die unterschiedlichen Längenabschnitte 2a, 2b der Fluidleitung 1 technisch vorteilhaft weiter auszugestalten, wird in vollem Umfang auf Fig. 14 bis 24 und die nachfolgenden Ausführungen verwiesen.

Was die Fluidkupplungs- und Verbinderteile bzw. deren Gehäuse 14, 15, 16, 17, 21, 22, 33, 34, 50, 51, 52, 53 betrifft, so kann für diese mit Vorteil vorgesehen werden, dass ein solches Teil am Ende des ersten Längenabschnitts 2a einer erfindungsgemäßen Fluidleitung 1 aus einem ersten Material besteht, welches ein erstes Polymer enthält, und ein solches Teil am Ende des zweiten Längenabschnitts 2b aus einem zweiten Material besteht, welches ein zweites Polymer enthält, wobei das Material des Teils 14, 15, 16, 17, 21, 22, 33, 34, 50, 51, 52, 53 am Ende des zweiten Längenabschnitts 2b eine höhere Beanspruchbarkeit aufweist als das Material des Teils 14, 15, 16, 17, 21, 22, 33, 34, 50, 51, 52, 53 am Ende des ersten Längenabschnitts 2a. Diese Materialien können, brauchen aber nicht vollständig identisch mit denen des entsprechenden Längenabschnittes 2a, 2b sein, an dessen Ende sich das betreffende Teil jeweils befindet, sollten aber mit Vorteil dem erfindungsgemäß vorgesehenen Material des entsprechenden Längenabschnittes 2a, 2b gleichgeartet sein, d. h. im Hinblick auf Temperatur, chemische Beständigkeit und/oder Druck die jeweils niedrigere oder höhere Beanspruchbarkeit aufweisen.

Eine bevorzugte Verbindungsanordnung 201, auf die sich die Figuren 14 bis 24 beziehen, dient zum schnellen und lösbaren Durchgangsverbinden von zwei elektrisch beheizbaren Längenabschnitten 202 und 204 einer Fluidleitung 1 und besteht dazu aus zwei Kupplungsteilen 206 und 208. Die Kupplungsteile 206, 208 weisen einerseits jeweils eine von zwei korrespondierenden, miteinander fluidisch kuppelbaren und mit jeweils einer der zwei zu verbindenden Längenabschnitte 202, 204 verbundenen Fluidkupplungsteilen 210, 212 sowie andererseits jeweils eines von zwei korrespondierenden, miteinander kuppelbaren Elektro-Steckverbinderteilen 214, 216 derart auf, dass durch Zusammenfügen der beiden Kupplungsteile 206, 208 die Fluidkupplungsteile 210, 212 einerseits und die Elektro-Steckverbinderteile 214, 216 andererseits gemeinsam, also praktisch gleichzeitig verbindbar sind. Ebenso können durch Trennen der beiden Kupplungsteile 206, 208 die Fluidkupplungsteile 210, 212 einerseits und die Elektro-Steckverbinderteile 214, 216 andererseits getrennt werden. Die Verbindungsanordnung 201 erlaubt somit ein schnelles Fügen und Trennen der Fluidverbindung und der, d. h. mindestens einer, elektrischen Verbindung in nur einem gemeinsamen Füge- bzw. Trennvorgang.

Jeder beheizbare Längenabschnitt 202, 204 besteht aus einer als Schlauch oder Rohr beispielsweise aus Kunststoff ausgebildeten Medienleitung 218, die der Rohrleitung 20 der erfindungsgemäßen Fluidleitung 1 gemäß Fig. 1 bis 13 entspricht und zur Beheizung des darin geführten Mediums mit mindestens einem elektrischen Heizelement 220 ausgestattet ist. In den dargestellten, bevorzugten Ausführungsbeispielen weist jede Medienleitung 218 zwei Heizelemente 220, 222 auf. Bevorzugt ist das/jedes Heizelement 220, 222 durch einen schraubenlinienförmig um die Medienleitung 218 über deren Länge hinweg gewickelten Heizleiter 224 gebildet, der aus einem geeigneten elektrischen Widerstands-Drahtmaterial besteht, so dass durch einen Stromfluss Wärme erzeugt wird. In den Figuren 14 bis 20 ist der/jeder Heizleiter 224 der Heizelemente 220, 222 nur stark vereinfacht als Zickzacklinie dargestellt, und in Fig. 23 sind die Heizelemente 220, 222 symbolhaft als Ersatz-Widerstände R2, R4 veranschaulicht. Der/ jeder Heizleiter 224 kann auch - zumindest abschnittsweise - geradlinig in Längsrichtung der Medienleitung 218 verlaufen.

Auch die Fluidkupplungsteile 210, 212 weisen zur Fluidbeheizung jeweils mindestens ein elektrisches Heizelement 226 auf, wobei diese mindestens zwei Heizelemente 226 der beiden Fluidkupplungsteile 210, 212 über die Elektro-Steckverbinderteile 214, 216 unmittelbar elektrisch verbunden oder verbindbar sind. Weiterhin sind dabei die Fluidkupplungsteile 210, 212 erfindungsgemäß unter Einschluss der Heizelemente 226 und der Elektro-Steckverbinderteile 214, 216 von einer in einer Kupplungsebene 228 in zwei Gehäuseteile 230, 232 geteilten Kapselung 234 umschlossen. Jedem Kupplungsteil 206, 208 bzw. dessen Fluidkupplungsteil 210, 212 ist eines der beiden Gehäuseteile 230, 232 der Kapselung 234 zugeordnet.

In Fig. 23 sind die Heizelemente 226 der Fluidkupplungsteile 210, 212 symbolhaft als Ersatzwiderstände R3 dargestellt, und die Kapselung 234 mit den Gehäuseteilen 230, 232 ist vereinfacht durch eine gestrichelte Linie angedeutet.

In bevorzugter Ausgestaltung weist jedes Kupplungsteil 206, 208 mindestens ein weiteres, zweites Elektro-Steckverbinderteil 236, 238 auf, wobei über diese zweiten Elektro-Steckverbinderteile 236, 238 unmittelbar entweder gemäß Fig. 23 die zwei Heizelemente 222 (R4) der beiden Fluidleitungsabschnitte 202, 204 oder gemäß Fig. 14 bis 21 zwei zusätzliche Heizelemente 240 der Fluidkupplungsteile 210, 212 miteinander verbunden oder verbindbar sind. Auch die zusätzlichen Heizelemente 240 sind - analog zu den bereits erwähnten Heizelementen 220, 222 und 226 - jeweils von einem elektrischen Heizleiter 224 gebildet. Jedes Heizelement 220, 222, 226, 240 umschließt das zugehörige Fluidkupplungsteil 210, 212 bzw. die zugehörige Fluidleitung bzw. den zugehörigen Fluidleitungsabschnitt 202, 204 bzw. Medienleitung 218 zumindest teilweise. Wie schon erwähnt wurde, hat bevorzugt jeder Heizleiter 224 einen gewendelten, insbesondere schraubenlinienförmigen Verlauf. Der/jeder Heizleiter 224 kann aber auch zumindest bereichsweise geradlinig verlaufen. Durch eine direkte, durch das vorstehend beschriebene erfindungsgemäße Verfahren herstellbare Anschlussverbindung der Heizleiter 224 an dem jeweils zugehörigen Steckverbinderteil 214, 216, 236, 238 werden auch letztere vorteilhafterweise mit beheizt, wodurch auch eine vorteilhafte Erwärmung des Innenraums innerhalb der Kapselung 234 erreicht wird.

In weiterer vorteilhafter Ausgestaltung sind die mit den Fluidkupplungsteilen 210, 212 verbundenen Fluidleitungsabschnitte 204, 204 gemeinsam mit den zugehörigen Heizelementen 220, 222 von jeweils einer Leitungsumhüllung 242 umschlossen. Vorteilhafterweise geht hierbei jede Leitungsumhüllung 242 einendig in eines der Gehäuseteile 230, 232 der Kapselung 234 der Kupplungsteile 206, 208 über. Bevorzugt ist jede Leitungsumhüllung 242 mit ihrem Ende formschlüssig in dem zugehörigen Gehäuseteil 230, 232 aufgenommen. Vorzugsweise kann hierzu jede Leitungsumhüllung 242 aus einem Wellrohr bestehen, wobei die Kapselung 234 im Bereich einer Aufnahmeöffnung formschlüssig in die Umfangskontur des Wellrohrs eingreift. Hierzu wird insbesondere auf Fig. 21 verwiesen.

Wie sich weiterhin aus Fig. 14 bis 19 sowie aus Fig. 23 und 24 ergibt, ist jeder Fluidleitungsabschnitt 202, 204 bevorzugt an seinem anderen, dem zugehörigen Kupplungsteil 206, 208 der Verbindungsanordnung 201 gegenüberliegenden Ende mit einem elektrisch beheizbaren Leitungsverbinder 244, 246 verbunden. Diese Leitungsverbinder 244, 246 sind bevorzugt als Steckverbinderteile, beispielsweise als Aufnahmemuffen für Stecker oder als Stecker zum Einstecken in korrespondierende Stecköffnungen, ausgebildet. Jeder Leitungsverbinder 244, 246 weist auch mindestens ein elektrisches Heizelement 248 - insbesondere in Form einer Umwicklung mit einem Heizleiter 224 analog zu den übrigen Heizelementen - sowie eine den jeweiligen Verbinder mit dem Heizelement 248 umschließende Umkapselung 250 auf (siehe insbesondere Fig. 15), wobei die jeweilige Leitungsumhüllung 242 auch in diesem Endbereich in die jeweilige Umkapselung 250 übergeht und darin insbesondere formschlüssig gehalten ist. Auf diese Weise wird die gesamte Leitungs- und Verbindungsanordnung von einer in Fig. 19 gesondert veranschaulichten Kapselungsanordnung umhüllt. Dazu sei besonders auf die Darstellung in Fig. 15 verwiesen.

An dieser Stelle sollen noch einige Ausgestaltungsmerkmale kurz erläutert werden, die in den schematischen Zeichnungen teilweise nicht erkennbar sind.

Die Kupplungsteile 206, 208 können beliebige geeignete Haltemittel, beispielsweise lösbare Rastmittel, zur gegenseitigen Fixierung in der verbundenen Kupplungslage gemäß Fig. 15 und 20 aufweisen. Solche Haltemittel, insbesondere Rastmittel, können an den Fluidkupplungsteilen 210, 212 und/oder an den Gehäuseteilen 230, 232 der Kapselung 234 vorhanden sein. Beispielsweise kann die gesamte Verbindungsanordnung 201 nur durch Rastmittel an der Kapselung 234 zusammengehalten werden. In Fig. 21, die auch dem mittleren Teil von Fig. 8 entspricht, ist rein exemplarisch - lediglich als eine von vielen möglichen Ausführungen - dargestellt, dass das eine Fluidkupplungsteil, z. B. 210, einen Steckeransatz 251 aufweist, der über eine Dichtung 253 umfangsgemäß abgedichtet in eine Muffenöffnung 255 des anderen Fluidkupplungsteils, z. B. 212, einsteckbar ist. Zur Fixierung gegen Lösen dieser Steckverbindung kann eine U-förmige Halteklammer 257 mit zwei Halteschenkeln 259 durch Queröffnungen 261 im Bereich der Muffenöffnung 255 lösbar eingeschoben werden, wobei die Halteschenkel 259 der Halteklammer 257 durch eine z. B. als Ringnut 263 ausgebildete Haltekontur des Steckeransatzes 251 verlaufen. Zusätzlich ist in Fig. 21 beispielhaft dargestellt, dass innerhalb des Fluidkanals des Fluidkupplungsteils 210 eine Wärmeleithülse 265 angeordnet ist, um Wärme aus dem von den Heizelementen 226, 240 umgebenen Bereich in den Bereich des Steckeransatzes 251 zu führen.

Die Elektro-Steckverbinderteile 214, 216 (optional auch 236, 238) sind über Haltemittel an den Fluidkupplungsteilen 210, 212 oder alternativ innerhalb der Kapselung 234 gehaltert. Gemäß Fig. 21 können die Steckverbinderteile 214, 216, 236, 238 in das Kunststoffmaterial der Fluidkupplungsteile 210, 212 eingeformt oder in Aufnahmeöffnungen fixiert eingesetzt sein.

Weiterhin sind die Fluidkupplungsteile 210, 212 und die zugehörigen Gehäuseteile 230, 232 der Kapselung 234 relativ zueinander über nicht gesondert dargestellte Haltemittel fixiert.

Zudem kann optional die Kapselung 234 zumindest teilweise mit einer wärmeisolierenden Masse gefüllt, z. B. vergossen sein. Zwischen der Kapselung 234 und dem jeweiligen Kupplungsteil 206, 208 kann auch ein wärmeisolierender Luftraum gebildet sein.

Die Gehäuseteile 230, 232 der Kapselung 234 können im Bereich der Trennebene 228 dichtend und dazu stumpf anliegend verbindbar oder überlappend ineinander steckbar und insbesondere über Haltemittel gegenseitig fixierbar sein.

Weiterhin kann jedes Gehäuseteil 230, 232 der Kapselung 234 aus zwei insbesondere gleichen Hälften bestehen, also insbesondere aus so genannten "Gleichteilen". Es liegen aber auch ungleiche Teile im Bereich der Erfindung.

Wie sich beispielhaft aus Fig. 20 ergibt, kann das/jedes Heizelement 226, 240 jedes Fluidkupplungsteils 210, 212 über ein - bevorzugt von einem Crimp-Verbinder gebildetes - Kontaktelement 252 mit dem zugehörigen Heizelement 220, 222 des Fluidleitungsabschnitts 202, 204 verbunden sein. Alternativ dazu ist in Fig. 21 angedeutet, dass das/jedes Heizelement 220, 222 jedes Leitungsabschnitts 202, 204 auch ohne Teilung einstückig in das Heizelement 226 bzw. 240 des jeweiligen Fluidkupplungsteils 210, 212 übergehen kann. Dazu wird der Heizleiter 224 mit entsprechender Länge durchlaufend von der jeweiligen Medienleitung 218 über das jeweilige Fluidkupplungsteil 210, 212 geführt.

In diesem Zusammenhang ist in Fig. 22, welche auch im Wesentlichen Fig. 4 entspricht, beispielhaft eine Ausführung für die Abschnitte 202 bzw. 204 der Fluidleitung dargestellt, die zunächst kontinuierlich, praktisch als "Endlos-Leitung" mit den Heizleitern 224 bewickelt ist. Die Heizleiter 224 sind dann mit einer Umhüllung insbesondere in Form mindestens einer schraubenlinienförmigen Umwicklung mit einem selbstklebenden Band 262 abgedeckt. Zum Konfektionieren, also zum Verbinden mit dem jeweiligen Fluidkupplungsteil 210/212 und dem anderendigen Leitungsverbinder 244/246 wird die so vorgefertigte Fluidleitung mit einer bestimmten Überlänge abgelängt, wobei die Überlänge so bemessen ist, dass von Endabschnitten 218a der Medienleitung 218 die Heizleiter 224 mit einer solchen Länge abgewickelt werden können, dass diese abgewickelten Enden dann auf das jeweilige Fluidkupplungsteil 210/212 bzw. den jeweiligen Leitungsverbinder 244/246 aufgewickelt werden können. Die überschüssigen, von den Heizleitern 224 "befreiten" Enden 218a der Medienleitung 218 werden als "Verschnitt" abgetrennt, bevor die Leitung mit dem Kupplungsteil bzw. Leitungsverbinder verbunden wird. Durch diese erfindungsgemäß vorteilhafte Verfahrensweise haben die Heizleiter 224 einen durchgehenden Verlauf ohne Unterbrechungen und zusätzliche Verbinderteile, wie Crimpverbinder.

Wie in Fig. 23 beispielhaft dargestellt ist, können alle vorhandenen Heizelemente 220, 222, 226, 248 und gegebenenfalls 240 (Fig. 14 bis 21) elektrisch in Reihe geschaltet sein. Die Reihenschaltung kann an einer eigentlich beliebigen Stelle mit einer Versorgungsspannung - insbesondere aus einer nicht dargestellten Fahrzeug-Batterie eines elektrischen Fahrzeug-Bordnetzes - versorgt werden. Mögliche Einspeisungsstellen sind in Fig. 23 mit "E" eingezeichnet. Je nach Verschaltung der Heizelemente kann sich aber auch eine kombinierte Reihen-Parallelschaltung oder auch eine Parallelschaltung ergeben. Es sei ausdrücklich bemerkt, dass alle denkbaren Schaltungs- und Einspeisungsvarianten im Bereich der Erfindung liegen. So könnte grundsätzlich auch ein durchgehender Heizleiter 224 ohne Trenn- und Verbindungsstellen alle vorhandenen Heizelemente bilden, indem er durchlaufend um alle zu beheizenden Komponenten gewickelt wird. Die einzigen Trenn- und Verbindungsstellen wären dann - soweit die bevorzugte Verbindungsanordnung 201 vorhanden ist - die Elektro-Steckverbinderteile 214, 216, 236, 238 der Kupplungsteile 206, 208 der Verbindungsanordnung 201.

In Fig. 24 ist die erfindungsgemäße Verwendung der Verbindungsanordnung 201 - ähnlich wie in Fig. 2a und 2b - veranschaulicht. Es handelt sich wiederum um ein SCR-Katalysatorsystem eines Fahrzeug-Verbrennungsmotors, wobei ein Fluid-Tank 254 mit einer Einspritzeinrichtung 256 zu verbinden ist, die das Fluid, eine wässrige Harnstofflösung, zur selektiven, katalytischen Reduktion von Stickoxiden in einen Abgasstrang 258 des nicht dargestellten Verbrennungsmotors einspritzt. Hierbei erlaubt die Verbindungsanordnung 201 eine Teilung der Leitungsverbindung zwischen dem Tank 254 und der Einspritzeinrichtung 256. Dies erleichtert die Teile-Montage innerhalb des Fahrzeugs. In aller Regel wird der Tank 254 zuerst montiert. Dazu ist es vorteilhaft, den Tank vor oder bei Montage mit dem ersten Fluidleitungsabschnitt 202 zu verbinden, bevorzugt über den Leitungsverbinder 244. Bei der weiteren Fahrzeugmontage ist dann häufig der Tank-Anschluss nicht mehr zugänglich. Dennoch kann die Einspritzeinrichtung 256 über den schon zuvor montierten ersten Fluidleitungsabschnitt 202 angeschlossen werden, was auf einfache und schnelle Weise über den zweiten Fluidleitungsabschnitt 204 erfolgt, indem lediglich die Kupplungsteile 206, 208 der Verbindungsanordnung 201 zusammengesteckt zu werden brauchen. Hierbei weisen die beiden Fluidleitungsabschnitte 202, 204 bevorzugt unterschiedliche Längen auf. Die Länge des kürzeren, ersten Fluidleitungsabschnitts 202 beträgt dabei mit Vorteil maximal 50 Prozent der Länge des längeren, zweiten Fluidleitungsabschnitts 204.

Erfindungsgemäß ist vorgesehen, dass die über die Verbindungsanordnung 201 verbundenen oder zu verbindenden Abschnitte 202, 204 der Medienleitung 218 hinsichtlich ihrer Material- und Gebrauchseigenschaften verschiedenartig gestaltet sind. So kann - wie bereits oben ausgeführt - z. B. ein Abschnitt der Medienleitung 218 aus einem kostengünstigen Formrohr aus Kunststoff, z. B. PA, bestehen, während für den anderen Abschnitt der Medienleitung 218 ein flexiblerer, für höhere Beanspruchungen, insbesondere höhere Temperaturen und/oder höheren Innendruck, ausgelegter Schlauch aus einem gummielastischen, insbesondere mehrschichtigen, z. B. gewebeverstärkten Material oder ein Leitungsstück aus einem hochwertigeren, für höhere Beanspruchungen, insbesondere höhere Temperaturen und/oder höheren Innendruck, ausgelegten Kunststoff, wie PPA (Polyphthalamid), verwendet wird. Dieser Leitungsabschnitt ist dann für besondere Beanspruchungen, wie höhere Temperaturen, wie sie vor allem in der Nähe der Einspritzeinrichtung 256 und des Abgasstrangs 258 auftreten, sowie auch zur Anpassung an eine Fluid-Volumenausdehnung beim Gefrieren und an den daraus resultierenden Gefrierdruck ausgelegt sein. Demgegenüber ist der erstgenannte, z. B. aus PA (Polyamid) bestehende Abschnitt der Medienleitung 218 sehr kostengünstig und kann deshalb besonders für größere Längen innerhalb eines Fahrzeugs eingesetzt werden. Deshalb kann es bei der in Fig. 4 veranschaulichten Anwendung auch vorteilhaft sein, die gesamte Leitungsverbindung zwischen dem Tank 254 und der Einspritzeinrichtung 256 in mindestens drei Abschnitte zu unterteilen, wobei jeweils in der Nähe des Tanks 254 und in der Nähe der Einspritzeinrichtung 256 zwei verschiedene Leitungsarten über eine Verbindungsanordnung verbunden sind, und zwar lösbar über die bevorzugte Verbindungsanordnung 201 (beispielhaft in Tank-Nähe) oder unlösbar über eine beliebige andere Verbindung 201' (z. B. in der Nähe der Einspritzeinrichtung 256). Das mittlere, längere Leitungsstück kann aus preisgünstigem Material bestehen, während für die äußeren, kürzeren Leitungsstücke hochwertigeres, insbesondere für höhere Temperaturen und/oder höheren Druck geeignetes Material verwendet wird.

Die Erfindung ist auch nicht auf die dargestellten Ausführungsbeispiele beschränkt, sondern der Fachmann kann diese bedarfsweise durch weitere zweckmäßige technische Maßnahmen ergänzen, ohne dass der Rahmen der Erfindung verlassen wird.

So kann auch das Wellrohr 20a bevorzugt entsprechend dem Längenabschnitt 2a, 202, 2b, 204, den es umhüllt, aus einem ersten oder zweiten Material, insbesondere aus einem technischen Kunststoff und/oder - zumindest teilweise - aus einem Hochleistungskunststoff gebildet sein. Gleiches gilt auch für die Fluidkupplungs- und/oder Verbinderteile, insbesondere deren Gehäuse 14, 15, 16, 17, 21, 22, 33, 34, 50, 51, 52, 53, 206, 208, 210, 212, 230, 232, 244, 246 und/oder deren Umkapselung oder Kapselung 234, 250.

Schließlich kann der Fachmann für eine Fluidleitung 1 weitere Einzelheiten hinsichtlich der Möglichkeiten der Bewicklung von Verbindungselementen 14, 15, 16, 17, 21, 22, 33, 34, 50, 51, 52, 53, 206, 208, 210, 212, 230, 232, 244, 246 und Rohrleitung 2, 218 mit dem Heizleiter 3, 224 der bereits eingangs erwähnten EP 1 985 908 A1 entnehmen.

## Patentansprüche

1. Verwendung einer beheizbaren Fluidleitung (1) für ein SCR-Katalysatorsystem eines Verbrennungsmotors, wobei die beheizbare Fluidleitung (1) mindestens eine Rohrleitung (2, 218) und mindestens einen sich über mindestens einen Teilbereich der Rohrleitungslänge (L) erstreckenden elektrischen Heizleiter (3, 224) umfasst, wobei die Rohrleitung (2) mindestens zwei miteinander verbundene Längenabschnitte (2a, 202, 2b, 204) aufweist,
**dadurch gekennzeichnet, dass** die Fluidleitung (1) über Verbinderteile (5, 14, 15, 21, 22, 50, 51, 244, 246), die eine nur zerstörend voneinander trennbare oder eine zerstörungsfrei voneinander lösbare Verbindung zwischen den Längenabschnitten (2a, 202, 2b, 204) herstellen, einen Tank (10, 254) des Katalysatorsystems mit einer Einspritzeinrichtung (11, 256) des Katalysatorsystems verbindet, wobei die Längenabschnitte (2a, 202, 2b, 204) hinsichtlich ihrer Materialeigenschaften und/oder ihrer konstruktiven Gestalt unterschiedlich ausgebildet sind, indem mindestens einerseits ein erster Längenabschnitt (2a, 202) aus einem ersten Material besteht, welches ein erstes Polymer enthält, und andererseits ein zweiter Längenabschnitt (2b, 204) aus einem zweiten Material besteht, welches ein zweites Polymer enthält, wobei das Material des zweiten Längenabschnitts (2b, 204) flexibler ist und/oder eine höhere Beanspruchbarkeit aufweist als das Material des ersten Längenabschnitts (2a, 202).

2. Verwendung nach Anspruch 1,
**dadurch gekennzeichnet, dass** das Material des zweiten Längenabschnitts (2b, 204) eine im Hinblick auf Temperatur, chemische Beständigkeit und/oder Druck höhere Beanspruchbarkeit aufweist als das Material des ersten Längenabschnitts (2a, 202).

3. Verwendung nach Anspruch 1 oder 2,
**dadurch gekennzeichnet, dass** das Polymer des ersten Längenabschnitts (2a, 202) ein technischer Kunststoff ist, wobei das erste Material insbesondere ein Polyamid (PA), vorzugsweise PA6 , PA66, PA11 und/oder PA12, enthält oder vollständig daraus besteht.

4. Verwendung nach einem der Ansprüche 1 bis 3,
**dadurch gekennzeichnet, dass** das Polymer des zweiten Längenabschnitts (2b, 204) ein Hochleistungskunststoff ist, wobei das zweite Material insbesondere ein Fluorpolymer, ein Polyarylenetherketon (PEAK), ein Polyphtalamid (PPA), ein Polyarylensulfid, wie Polyphenylensulfid (PPS), und/oder PA 612 enthält oder vollständig daraus besteht.

5. Verwendung nach einem der Ansprüche 1 bis 3,
**dadurch gekennzeichnet, dass** das zweite Material ein Elastomer, beispielsweise Ethylen-Propylen-Dien-Kautschuk (EPDM), Ethylen-Propylen-Kautschuk (EPM), hydrierten Acrylnitrilbutadien-Kautschuk (HNBR) und/oder ein thermoplastisches Elastomer (TPE), enthält oder vollständig daraus besteht.

6. Verwendung nach einem der Ansprüche 1 bis 5,
**dadurch gekennzeichnet, dass** die Rohrleitung (2) jeweils zwei oder mehr Längenabschnitte (2a, 202) umfasst, die aus dem ersten Material bestehen, und/oder zwei oder mehr Längenabschnitte (2b, 204) umfasst, die aus dem zweiten Material bestehen.

7. Verwendung nach Anspruch 6,
**dadurch gekennzeichnet, dass** in der Nähe des Tanks (10, 254) und in der Nähe der Einspritzeinrichtung (11, 256) jeweils Längenabschnitte (2b, 204) angeordnet sind, die aus dem zweiten Material bestehen, wobei dazwischen ein Längenabschnitt (2a, 202) angeordnet ist, der aus dem ersten Material besteht.

8. Verwendung nach einem der Ansprüche 1 bis 5,
**dadurch gekennzeichnet, dass** die Rohrleitung (2) genau zwei miteinander verbundene Längenabschnitte (2a, 202, 2b, 204) aufweist, wobei in der Nähe des Tanks (10, 254) ein Längenabschnitt (2a, 202) angeordnet ist, der aus dem ersten Material besteht, und in der Nähe der Einspritzeinrichtung (11, 256) ein Längenabschnitt (2b, 204) angeordnet ist, der aus dem zweiten Material besteht.

9. Verwendung nach einem der Ansprüche 1 bis 8,
**dadurch gekennzeichnet, dass** zumindest zwei Längenabschnitte (2a, 202, 2b, 204) zerstörungsfrei voneinander lösbar über jeweils eine Verbindungsanordnung (30, 201), die mindestens jeweils zwei korrespondierende miteinander kuppelbare, mit jeweils einem der zwei zu verbindenden Längenabschnitte (2a, 202, 2b, 204) verbundene Fluidkupplungs- oder Verbinderteile (16, 17, 21, 22, 33, 34, 50, 51, 206, 208, 210, 212, 244, 246) umfasst, miteinander verbunden sind.

10. Verwendung nach Anspruch 9,
**dadurch gekennzeichnet, dass** die Verbindungsanordnung (30, 201) aus zwei Kupplungsteilen (31, 32, 206, 208) besteht, die jeweils eines von zwei korrespondierenden, miteinander kuppelbaren und mit jeweils einem der zwei zu verbindenden Längenabschnitte (2a, 202, 2b, 204) verbundenen Fluidkupplungsteilen (33, 34, 210, 212) sowie jeweils mindestens ein Elektro-Steckverbinderteil (35, 36, 214, 216) derart aufweisen, dass durch Zusammenfügen bzw. Trennen der beiden Kupplungsteile (31, 32, 206, 208) die Fluidkupplungsteile (33, 34, 210, 212) einerseits und die Elektro-Steckverbinderteile (35, 36, 214, 216) andererseits gemeinsam, d. h. gleichzeitig, verbindbar bzw. trennbar sind.

11. Verwendung nach einem der Ansprüche 1 bis 10,
**dadurch gekennzeichnet, dass** ein Fluidkupplungs- und/oder Verbinderteil bzw. dessen Gehäuse (14, 15, 16, 17, 21, 22, 33, 34, 50, 51, 52, 53, 206, 208, 210, 212, 230, 232, 244, 246) und/oder eine Umkapselung/Kapselung (234, 250) dafür am Ende des ersten Längenabschnitts (2a, 202) aus einem ersten Material besteht, welches ein erstes Polymer enthält, und ein Fluidkupplungs- und/oder Verbinderteil bzw. dessen Gehäuse (14, 15, 16, 17, 21, 22, 33, 34, 50, 51, 52, 53, 206, 208, 210, 212, 230, 232, 244, 246) und/oder eine Umkapselung/Kapselung (234, 250) dafür am Ende des zweiten Längenabschnitts (2b, 204) aus einem zweiten Material besteht, welches ein zweites Polymer enthält, wobei das zweite Material eine höhere Beanspruchbarkeit aufweist als das erste Material.

12. Verwendung nach einem der Ansprüche 1 bis 11,
**dadurch gekennzeichnet, dass** die Längenabschnitte (2a, 202, 2b, 204) unterschiedliche Längen (La, Lb) aufweisen, wobei die Länge (Lb) des zweiten, kürzeren Längenabschnitts (2b, 204) oder die Summe der aus dem zweiten Polymer bestehenden Längenabschnitte (2b, 204) maximal 50 Prozent, bevorzugt maximal 20 Prozent der Länge (La) des ersten, längeren Längenabschnitts (2a, 202) oder der Summe der aus dem ersten Polymer bestehenden Längenabschnitte (2a, 202) und/oder mindestens 200 mm bis 500 mm beträgt.

13. Verwendung nach einem der Ansprüche 1 bis 12,
**dadurch gekennzeichnet, dass** die Rohrleitung (2, 218) einen kreisförmigen Querschnitt aufweist, wobei der Querschnitt der Rohrleitung (2, 218) bevorzugt zumindest bereichsweise von der Kreisform abweicht.

14. Verwendung nach einem der Ansprüche 1 bis 13,
**dadurch gekennzeichnet, dass** der Heizleiter (3, 224) innen- oder außenliegend an oder in der Rohrleitung (2, 218) angeordnet, vorzugsweise adaptiv mit der Rohrleitung (2, 218) verbunden ist.

15. Verwendung nach einem der Ansprüche 1 bis 14,
**dadurch gekennzeichnet, dass** der Heizleiter (3, 224) und die Rohrleitung (2, 218) von einer Leitungsumhüllung (4, 242) umgeben sind, die insbesondere aus einem umfänglich geschlossenen Wellrohr (20a) gebildet ist, welches bevorzugt entsprechend dem Längenabschnitt (2a, 202, 2b, 204), den es umhüllt, aus einem ersten oder zweiten Material, insbesondere aus einem technischen Kunststoff und/oder - zumindest teilweise - aus einem Hochleistungskunststoff gebildet ist.

16. Verwendung nach einem der Ansprüche 1 bis 15,
**dadurch gekennzeichnet, dass** eine jeweilige Wandung (102, 120) der Längenabschnitte (2a, 202, 2b, 204) der Rohrleitung (2, 218) mehrschichtig (102a, 102b, 120a, 120b, 120c) aufgebaut ist, wobei insbesondere eine Innenwandung (102a, 120a) ein fluorhaltiges Polymer enthält und wobei bevorzugt die Wandung (120) eines Längenabschnitts (2b), der aus dem zweiten Material besteht, eine Verstärkung (120c) aufweist.

17. Verwendung nach einem der Ansprüche 1 bis 16,
**dadurch gekennzeichnet, dass** zur Herstellung der beheizbaren Fluidleitung (1) zuerst ein Rohrleitungsstrang (1s) kontinuierlich mit dem mindestens einen Heizleiter (3, 224) bewickelt wird, wonach zunächst das solchermaßen vorgefertigte Zwischenprodukt zu Fluidleitungsstücken (1s) abgelängt wird, welche jeweils endseitig derart bemessene Überlängen-Abschnitte (1ü, 218a) aufweisen, dass der Heizleiter (3, 224) von jedem dieser Überlängen-Abschnitte (1ü, 218a) mit einer Länge (L3) abgewickelt werden kann, die es ermöglicht, den Heizleiter (3, 224) auf ein Fluidkupplungs- und/ oder Verbinderteil bzw. dessem Gehäuse (14, 15, 16, 17, 21, 22, 33, 34, 50, 51, 52, 53, 206, 208, 210, 212, 230, 232, 244, 246) aufzuwickein, wonach dann jeweils nach einem Abwickeln des Heizleiters (3, 224) von dem Überlängen-Abschnitt (1ü, 218a) dieser Überlängen-Abschnitt (1ü, 218a) von dem Fluidleitungsstück (1s) abgetrennt wird, das so entstandene Rohrleitungsende (2e) mit dem Fluidkupplungs- und/oder Verbinderteil bzw. dessen Gehäuse (14, 15, 16, 17, 21, 22, 33, 34, 50, 51, 52, 53, 206, 208, 210, 212, 230, 232, 244, 246) verbunden, und das Fluidkupplungs- und/oder Verbinderteil bzw. dessen Gehäuse (14, 15, 16, 17, 21, 22, 33, 34, 50, 51, 52, 53, 206, 208, 210, 212, 230, 232, 244, 246) zumindest teilweise mit dem Heizleiter (3, 224) bewickelt wird.

18. Verwendung nach Anspruch 17,
**dadurch gekennzeichnet, dass** ein Rohrleitungsstrang (2s) eingesetzt wird, der aus mindestens zwei Längenabschnitten (2a, 202, 2b, 204) gebildet ist, die hinsichtlich ihrer geometrischen, ihrer Material- und/oder Gebrauchseigenschaften unterschiedlich ausgebildet und vorzugsweise unlösbar miteinander verbunden sind.

19. Verwendung nach Anspruch 17 oder 18,
**dadurch gekennzeichnet, dass** eine Leitungsumhüllung (4, 242) zumindest jeweils teilweise durch eine schraubenlinienförmige Umwicklung mit einem selbstklebenden Band (20, 262) und/oder durch ein Wellrohr (20a) hergestellt wird, wobei vorzugsweise ein axiales Aufschieben des Wellrohrs (20a) erfolgt, nachdem der Rohrleitungsstrang (1s) kontinuierlich mit dem mindestens einen Heizleiter (3, 224) und gegebenenfalls dem selbstklebenden Band (20, 262) bewickelt worden und/oder nachdem das vorgefertigte Zwischenprodukt zu Fluidleitungsstücken (1s) abgelängt worden ist.

20. Verwendung nach Anspruch 19,
**dadurch gekennzeichnet, dass** das Wellrohr (20a) montiert wird, nachdem die beiden Längenabschnitte (2a, 202, 2b, 204) zumindest fluidisch verbunden wurden.

## Claims

1. A use of a heatable fluid line (1) for an SCR-catalyst system of an internal combustion engine, wherein the heatable fluid line (1) comprises at least one tube (2, 218) and at least one electrical heating conductor (3, 224) extending over at least one partial region of the length (L) of the tube, wherein the tube (2) features at least two length sections (2a, 202, 2b, 204) joined together.
**characterized in that** the fluid line (1) connects a tank (10, 254) of the catalyst system to an injection device (11, 245) of the catalyst system by means of connector parts (5, 14, 15, 21, 22, 50, 51, 244, 246) which set up a connection between the length sections (2a, 202, 2b, 204), said connection being detachable only in a destructive manner or in a nondestructive manner, wherein the length sections (2a, 202, 2b, 204) are of a different design with respect to their material properties and/or their structural shape **in that** at least on one side a first length section (2a, 202) consists of a first material which contains a first polymer, and on the other side a second length section (2b, 204) consists of a second material which contains a second polymer, wherein the material of the second length section (2b, 204) is more flexible and/or has a greater stress resistance than the material of the first length section (2a, 202).

2. The use according to claim 1,
**characterized in that** the material of the second length section (2b, 204) has a greater stress resistance with respect to temperature, chemical resistance and/or pressure than the material of the first length section (2a, 202).

3. A use according to claim 1 or 2,
**characterized in that** the polymer of the first length section (2a, 202) is a technical grade plastic, wherein the first material contains or consists entirely of in particular a polyamide (PA), preferentially PA6, PA66, PA11 and/or PA12.

4. A use according to any one of claims 1 to 3,
**characterized in that** the polymer of the second length section (2b, 204) is a high-performance plastic, wherein the second material contains or consists entirely of a fluoropolymer, a polyarylene ether ketone (PEAK), a polyphthalamide (PPA), a polyarylene sulfide, such as polyphenylene sulfide (PPS), and/or PA 612.

5. A use according to any one of claims 1 to 3,
**characterized in that** the second material contains or consists entirely of an elastomer, for example, ethylene-propylene-diene rubber (EPDM), ethylene-propylene rubber (EPM), hydrated acrylonitrile butadiene rubber (HNBR) and/or a thermoplastic elastomer (TPE).

6. A use according to any one of claims 1 to 5,
**characterized in that** the tube (2) comprises two or more length sections (2a, 202) which consist of the first material and/or two or more length sections (2b, 204) which consist of the second material.

7. The use according to claim 6,
**characterized in that** in the vicinity of the tank (10, 254) and in the vicinity of the injection device (11, 256) length sections (2b, 204) are arranged which consist of the second material, wherein a length section (2a, 202) made of the first material is arranged therebetween.

8. A use according to any one of claims 1 to 5,
**characterized in that** the tube (2) features precisely two length sections (2a, 202, 2b, 204) connected together, wherein, in the vicinity of the tank (10, 254), one length section (2a, 202) is arranged which consists of the first material, and in the vicinity of the injection device (11, 256) one length section (2b, 204) is arranged which consists of the second material.

9. A use according to one of claims 1 to 8,
**characterized in that** at least two length sections (2a, 202, 2b, 204) are joined to each other respectively detachable from each other in a nondestructive manner by means of a connector device (30, 201), which at least comprises two corresponding, mutually connectable fluid couplings or connector parts (16, 17, 21, 22, 33, 34, 50, 51, 206, 208, 210, 212, 244, 246), each connected to one of the two length sections (2a, 202, 2b, 204) to be connected.

10. The use according to claim 9,
**characterized in that** the connection arrangement (30, 201) consists of two coupling parts (31, 32, 206, 208), each of which features one of two fluid coupling parts (33, 34, 210, 212) connecting one of two corresponding length sections (2a, 202, 2b, 204) to be joined together, and also at least one electric plug connector (35, 36, 214, 216) such that, by joining or separating the two coupling parts (31, 32, 206, 208), the fluid coupling parts (33, 34, 210, 212) on the one side, and the electric plug connectors (35, 36, 214, 216) on the other side can be connected or disconnected at the same time.

11. A use according to any one of claims 1 to 10,
**characterized in that** one fluid coupling part and/or connector part, or the housing thereof (14, 15, 16, 17, 21, 22, 33, 34, 50, 51, 52, 53, 206, 208, 210, 212, 230, 232, 244, 246) and/or an encapsulation/enclosure (234, 250) therefor at the end of the first length section (2a, 202) consists of a first material which contains a first polymer, and a fluid coupling part and/or connector part or the housing thereof (14, 15, 16, 17, 21, 22, 33, 34, 50, 51, 52, 53, 206, 208, 210, 212, 230, 232, 244, 246) and/or an encapsulation/enclosure (234, 250) therefor at the end of the second length section (2b, 204) consists of a second material which contains a second polymer, wherein the second material features a greater stress resistance than the first material.

12. A use according to any one of claims 1 to 11,
**characterized in that** the length sections (2a, 202, 2b, 204) have different lengths (La, Lb), wherein the length (Lb) of the second, shorter length section (2b, 204), or the sum of the length sections (2b, 204) consisting of the second polymer is a maximum of 50 percent, preferably a maximum of 20 percent of the length (La) of the first, longer length section (2a, 202), or of the sum of the length sections (2a, 202) consisting of the first polymer and/or at least 200 mm to 500 mm.

13. A use according to one of claims 1 to 12,
**characterized in that** the tube (2, 281) has a circular cross-section, wherein the cross-section of the tube (2, 218) deviates from the circular shape preferably at least in sections.

14. A use according to any one of claims 1 to 13,
**characterized in that** the heating conductor (3, 224) is arranged to rest against the tube (2, 218) either on the inside or on the outside thereof, and is connected to the tube (2, 218) preferentially in an adaptive manner.

15. A use according to any one of claims 1 to 14,
**characterized in that** the heating conductor (3, 224) and the tube (2, 218) are surrounded by the line jacket (4, 242) which is formed in particular from a circumferentially closed corrugated tube (20a), which is preferably formed matching the length section (2a, 202, 2b, 204) which it wraps, of a first or second material, in particular of a technical grade plastic and/or - at least partly - of a high-performance plastic.

16. A use according to any one of claims 1 to 15,
**characterized in that** one wall (102, 120) of the length sections (2a, 202, 2b, 204) of the tube (2, 218) is respectively configured of multiple layers (102a, 102b, 120a, 120b, 120c), wherein in particular one interior wall (102a, 120a) contains a fluorine-containing polymer and wherein preferably the wall (120) of a length section (2b) which consists of the second material features a reinforcement (120c).

17. A use according to one of claims 1 to 16
**characterized in that** to produce the heatable fluid line (1), a blank tube (1s) is first wrapped continuously with the at least one heating conductor (3, 224), whereupon the so prefabricated intermediate product is then cut to the length of the fluid line segments (1 s), each of which features on the end side overlong sections (1ü, 218a) dimensioned such that the heating conductor (3, 224) can be unwound from each of these overlong sections (1ü 218a) to a length (L3) which allows to wind the heating conductor (3, 224) onto a fluid coupling part and/or connector part, or housing thereof (14, 15, 16, 17, 21, 22, 33, 34, 50, 51, 52, 53, 206, 208, 210, 212, 230, 232, 244, 246), whereupon, then, after unwinding the heating conductor (3, 224) from the overlong section (1ü, 218a), said overlong section (1ü, 218a) is separated from the fluid line segment (1s), the resulting tube end (2e) being connected to the fluid coupling part and/or connector part, or housing thereof (14, 15, 16, 17, 21, 22, 33, 34, 50, 51, 52, 53, 206, 208, 210, 212, 230, 232, 244, 246), and the fluid coupling part and/or connector part, or housing thereof (14, 15, 16, 17, 21, 22, 33, 34, 50, 51, 52, 53, 206, 208, 210, 212, 230, 232, 244, 246) being wound at least in part with the heating conductor (3, 224).

18. The use according to claim 17,
**characterized in that** a tube blank (2s) is used which is formed from at least two length sections (2a, 202, 2b, 204) which are differently configured with respect to their geometry, their material and/or performance characteristics, and preferentially joined together in a non-detachable manner.

19. A use according to claim 17 or 18,
**characterized in that** one line jacket (4, 242) is produced at least in part by helical winding with a self-adhesive tape (20, 262) and/or by a corrugated tube (20a), wherein preferentially the corrugated tube (20a) is pushed on axially after the tube blank (1s) has been continuously wound with the at least one heating conductor (3, 224) and, if need be, with the self-adhesive tape (20, 262) and/or after the prefabricated intermediate product has been cut to the length of the fluid line segments (1s).

20. The use according to claim 19,
**characterized in that** the corrugated tube (20a) is mounted after the two length sections (2a, 202, 2b, 204) were at least joined in a fluidic manner.

## Revendications

1. Utilisation d'une conduite de fluide (1) pouvant être chauffée pour un système catalyseur SCR (à réduction catalytique sélective) d'un moteur à combustion interne, dans laquelle la conduite de fluide (1) pouvant être chauffée comprend au moins une conduite tubulaire (2, 218) et au moins un conducteur chauffant (3, 224) électrique s'étendant sur au moins une zone partielle de la longueur de conduite tubulaire (L), dans laquelle la conduite tubulaire (2) présente au moins deux sections longitudinales (2a, 202, 2b, 204) reliées entre elles, **caractérisée en ce que** la conduite de fluide (1) relie, par l'intermédiaire de parties de connecteur (5, 14, 15, 21, 22, 50, 51, 244, 246), lesquelles établissent entre les sections longitudinales (2a, 202, 2b, 204) une liaison pouvant les séparer les unes des autres uniquement avec des dégradations ou pouvant les détacher les unes des autres sans dégradation, un réservoir (10, 254) du système catalyseur à un dispositif d'injection (11, 256) du système catalyseur, dans laquelle les sections longitudinales (2a, 202, 2b, 204) sont réalisées différemment eu égard aux caractéristiques de leurs matériaux et/ou eu égard à leur structure **en ce qu'**au moins d'une part une première section longitudinale (2a, 202) est constituée d'un premier matériau contenant un premier polymère et **en ce que**, d'autre part, une deuxième section longitudinale (2b, 204) est constituée d'un deuxième matériau contenant un deuxième polymère, dans laquelle le matériau de la deuxième section longitudinale (2b, 204) est plus flexible et/ou présente une résistance aux contraintes plus importante que le matériau de la première section longitudinale (2a, 202).

2. Utilisation selon la revendication 1,
**caractérisée en ce que** le matériau de la deuxième section longitudinale (2b, 204) présente une résistance aux contraintes en matière de température, de résistance chimique et/ou en matière de pression plus importante que le matériau de la première section longitudinale (2a, 202).

3. Utilisation selon la revendication 1 ou 2,
**caractérisée en ce que** le polymère de la première section longitudinale (2a, 202) est une matière plastique technique, dans laquelle le premier matériau, en particulier un polyamide (PA), contient de préférence du PA6, du PA66, du PA11 et/ou du PA12 ou en est constitué intégralement.

4. Utilisation selon l'une quelconque des revendications 1 à 3,
**caractérisée en ce que** le polymère de la deuxième section longitudinale (2b, 204) est une matière plastique haute performance, dans laquelle le deuxième matériau contient en particulier un polymère fluoré, une polyarylène-éther-cétone (PEAKS), un polyphtalamide (PPA), un polysulfure d'arylène tel que le polysulfure de phénylène (PPS), et/ou du PA 612 ou en est constitué intégralement.

5. Utilisation selon l'une quelconque des revendications 1 à 3,
**caractérisée en ce que** le deuxième matériau est un élastomère, par exemple un caoutchouc éthylène-propylène-diène (EPDM), un caoutchouc éthylène-propylène (EPM), un caoutchouc acrylonitrile butadiène hydrogéné (HNBR) et/ou un élastomère thermoplastique (TPE) ou en est constitué intégralement.

6. Utilisation selon l'une quelconque des revendications 1 à 5,
**caractérisée en ce que** la conduite tubulaire (2) comprend respectivement deux sections longitudinales (2a, 202) ou plus, lesquelles sont constituées du premier matériau, et/ou deux sections longitudinales (2b, 204) ou plus, qui sont constituées du deuxième matériau.

7. Utilisation selon la revendication 6,
**caractérisée en ce que** sont disposées, à proximité du réservoir (10, 254) et à proximité du dispositif d'injection (11, 256), respectivement des sections longitudinales (2b, 204), qui sont constituées du deuxième matériau, dans laquelle une section longitudinale (2a, 202) y est intercalée, laquelle est constituée du premier matériau.

8. Utilisation selon l'une quelconque des revendications 1 à 5,
**caractérisée en ce que** la conduite tubulaire (2) présente précisément deux sections longitudinales (2a, 202, 2b, 204) reliées l'une à l'autre, dans laquelle est disposée, à proximité du réservoir (10, 254), une section longitudinale (2a, 202) qui est constituée du premier matériau, et qu'est disposée, à proximité du dispositif d'injection (11, 256), une section longitudinale (2b, 204), qui est constituée du deuxième matériau.

9. Utilisation selon l'une quelconque des revendications 1 à 8,
**caractérisée en ce qu'**au moins deux sections longitudinales (2a, 202, 2b, 204) sont reliées l'une à l'autre de manière à pouvoir être détachées l'une de l'autre sans dégradations par l'intermédiaire respectivement d'un ensemble d'assemblage (30, 201), qui comprend au moins respectivement deux parties de connecteur ou d'accouplement de fluide (16, 17, 21, 22, 33, 34, 50, 51, 206, 208, 210, 212, 244, 246) correspondantes pouvant être couplées l'une à l'autre, reliées à respectivement une des deux sections longitudinales (2a, 202, 2b, 204) devant être reliées.

10. Utilisation selon la revendication 9,
**caractérisée en ce que** l'ensemble d'assemblage (30, 201) est constitué de deux parties d'accouplement (31, 32, 206, 208), lesquelles présentent respectivement une de deux parties d'accouplement de fluide (33, 34, 210, 212) correspondantes, pouvant être couplées l'une à l'autre et reliées à respectivement une des deux sections longitudinales (2a, 202, 2b, 204) devant être reliées, ainsi que respectivement au moins une partie de connecteur enfichable électrique (35, 36, 214, 216) de telle manière que les parties d'accouplement de fluide (33, 34, 210, 212) d'une part et les parties de connecteur enfichable électriques (35, 36, 214, 216) d'autre part peuvent être reliées ou séparées conjointement, en d'autres termes simultanément, par l'assemblage ou la séparation des deux parties d'accouplement (31, 32, 206, 208).

11. Utilisation selon l'une quelconque des revendications 1 à 10,
**caractérisée en ce qu'**une partie d'accouplement de fluide et/ou de connecteur ou son boîtier (14, 15, 16, 17, 21, 22, 33, 34, 50, 51, 52, 53, 206, 208, 210, 212, 230, 232, 244, 246) et/ou une enceinte/un blindage (234, 250) dédié(e) au niveau de l'extrémité de la première section longitudinale (2a, 202) est constitué(e) d'un premier matériau contenant un premier polymère, et **en ce qu'**une partie d'accouplement de fluide et/ou de connecteur ou son boîtier (14, 15, 16, 17, 21, 22, 33, 34, 50, 51, 52, 53, 206, 208, 210, 212, 230, 232, 244, 246) et/ou une enceinte/un blindage (234, 250) dédié(e) au niveau de l'extrémité de la deuxième section longitudinale (2b, 204) est constitué(e) d'un deuxième matériau qui contient un deuxième polymère, dans laquelle le deuxième matériau présente une résistance aux contraintes plus importante que le premier matériau.

12. Utilisation selon l'une quelconque des revendications 1 à 11,
**caractérisée en ce que** les sections longitudinales (2a, 202, 2b, 204) présentent diverses longueurs (La, Lb), dans laquelle la longueur (Lb) de la deuxième section longitudinale plus courte (2b, 204) ou la somme des sections longitudinales (2b, 204) constituées du deuxième polymère est égale à 50 % au maximum, de préférence à 20 % au maximum de la longueur (La) de la première section longitudinale (2a, 202) présentant une plus grande longueur ou de la somme des sections longitudinales (2a, 202) constituées du premier polymère et/ou présente une valeur minimale allant de 200 mm à 500 mm.

13. Utilisation selon l'une quelconque des revendications 1 à 12,
**caractérisée en ce que** la conduite tubulaire (2, 218) présente une section transversale circulaire, dans laquelle la forme de la section transversale de la conduite tubulaire (2, 218) diverge de préférence au moins par endroits de la forme circulaire.

14. Utilisation selon l'une quelconque des revendications 1 à 13,
**caractérisée en ce que** le conducteur chauffant (3, 224) qui est disposé côté intérieur ou côté extérieur contre ou dans la conduite tubulaire (2, 218), est relié de préférence de manière adaptative à la conduite tubulaire (2, 218).

15. Utilisation selon l'une quelconque des revendications 1 à 14,
**caractérisée en ce que** le conducteur chauffant (3, 224) et la conduite tubulaire (2, 218) sont entourés d'une gaine de conduite (4, 242), qui est formée en particulier à partir d'un tuyau ondulé (20a) fermé sur la périphérie, lequel est formé de préférence conformément à la section longitudinale (2a, 202, 2b, 204), qu'il enveloppe, à partir d'un premier ou d'un deuxième matériau, en particulier à partir d'une matière plastique technique et/ou - au moins en partie - à partir d'une matière plastique haute performance.

16. Utilisation selon l'une quelconque des revendications 1 à 15,
**caractérisée en ce qu'**une paroi (102, 120) respective des sections longitudinales (2a, 202, 2b, 204) de la conduite tubulaire (2, 218) présente une structure multicouche (102a, 102b, 120a, 120b, 120c), dans laquelle en particulier une paroi intérieure (102a, 120a) contient un polymère fluoré et dans laquelle de préférence la paroi (120) d'une section longitudinale (2b), qui est constituée du deuxième matériau, présente un renforcement (120c).

17. Utilisation selon l'une quelconque des revendications 1 à 16,
**caractérisée en ce qu'**aux fins de la fabrication de la conduite de fluide (1) pouvant être chauffée, on entoure dans un premier temps une ligne de conduite tubulaire (1s) en continu du conducteur chauffant (3, 224) au moins au nombre de un, puis le produit intermédiaire ainsi préfabriqué est tronçonné pour obtenir des pièces de conduite de fluide (1s), lesquelles présentent respectivement côté extrémité des sections de rallonge (1ü, 218a) mesurées telles que le conducteur chauffant (3, 224) peut être déroulé de chacune des sections de rallonge (1ü, 218a) sur une longueur (L3) qui permet d'enrouler le conducteur chauffant (3, 224) sur une partie d'accouplement de fluide et/ou de connecteur ou sur son boîtier (14, 15, 16, 17, 21, 22, 33, 34, 50, 51, 52, 53, 206, 208, 210, 212, 230, 232, 244, 246), puis ladite section de rallonge (1ü, 218a) est détachée de la pièce de conduite de fluide (1s) après avoir déroulé le conducteur chauffant (3, 224) de la section de rallonge (1ü, 218a), l'extrémité de conduite tubulaire (2e) ainsi obtenue étant reliée à la partie d'accouplement de fluide et/ou de connecteur ou son boîtier (14, 15, 16, 17, 21, 22, 33, 34, 50, 51, 52, 53, 206, 208, 210, 212, 230, 232, 244, 246), et la partie d'accouplement de fluide et/ou de connecteur ou son boîtier (14, 15, 16, 17, 21, 22, 33, 34, 50, 51, 52, 53, 206, 208, 210, 212, 230, 232, 244, 246) est entouré(e) au moins en partie du conducteur chauffant (3, 224).

18. Utilisation selon la revendication 17,
**caractérisée en ce qu'**une ligne de conduite tubulaire (2s) est utilisée, laquelle est formée à partir au moins de deux sections longitudinales (2a, 202, 2b, 204), qui sont réalisées différemment eu égard aux caractéristiques de leur forme géométrique, de leur matériau et/ou d'utilisation et qui sont reliées entre elles de préférence de manière à ne pas pouvoir être détachées.

19. Utilisation selon la revendication 17 ou 18,
**caractérisée en ce qu'**une gaine de conduite (4, 242) est fabriquée au moins respectivement en partie par un enroulement d'une bande autocollante (20, 262) de manière hélicoïdale et/ou par un tuyau ondulé (20a), dans laquelle de préférence le tuyau ondulé (20a) est enfilé de manière axiale une fois que la ligne de conduite tubulaire (1a) a été entourée en continu du conducteur chauffant (3, 224) au moins au nombre de un et éventuellement de la bande autocollante (20, 262) et/ou une fois que le produit intermédiaire préfabriqué a été tronçonné pour obtenir des pièces de conduite de fluide (1s).

20. Utilisation selon la revendication 19,
**caractérisée en ce que** le tuyau ondulé (20a) est monté une fois que les deux sections longitudinales (2a, 202, 2b, 204) ont été mises au moins en communication fluidique.
